(19) Europäisches Patentamt
European Patent Office
Office européen des brevets

(11) Publication number: **0 216 074 B1**

(12) # EUROPEAN PATENT SPECIFICATION

(45) Date of publication of patent specification: **16.06.93**

(51) Int. Cl.5: **C08F 261/04**, G02B 1/04

(21) Application number: **86110372.9**

(22) Date of filing: **28.07.86**

(54) **Polyvinyl alcohol derivatives and crosslinked hydrogel contact lenses made therefrom.**

(30) Priority: **31.07.85 US 760805**
**13.12.85 US 809695**

(43) Date of publication of application:
**01.04.87 Bulletin 87/14**

(45) Publication of the grant of the patent:
**16.06.93 Bulletin 93/24**

(84) Designated Contracting States:
**AT BE CH DE FR GB IT LI LU NL SE**

(56) References cited:
**EP-A- 0 128 004**
**EP-A- 0 130 389**
**EP-B- 0 047 321**
**FR-A- 2 168 623**
**FR-A- 2 402 525**
**US-A- 3 928 299**
**US-A- 4 426 492**
**US-A- 4 574 137**

(73) Proprietor: **CIBA-GEIGY AG**
**Klybeckstrasse 141**
**CH-4002 Basel(CH)**

(72) Inventor: **Goldenberg, Merrill**
**626 Kent Avenue**
**Teaneck New Jersey 07666(US)**
Inventor: **Mueller, Karl Friedrich**
**119 West 77th Street**
**New York New York 10024(US)**

(74) Representative: **Zumstein, Fritz, Dr. et al**
**Bräuhausstrasse 4**
**W-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.6/3.3.1)

## Description

The instant invention relates to polyvinyl alcohol (PVA) derivatives containing pendant (meth)acryloyl units bound to the polyvinyl alcohol backbone, through urethane groups, which may be further reacted with a conventional vinylic monomer, and which can be crosslinked to form soft hydrogel contact lenses possessing high oxygen permeability and mechanical strength and capable of being sterilized in either boiling water or dilute hydrogen peroxide solutions.

In general, most existing hydrogel soft contact lens materials are based on HEMA, also known as hydroxyethyl methacrylate or as ethyleneglycol monomethacrylate, with one or more optional comonomers as described in U.S. Patent Nos. 2,976,576, 3,841,985 and 3,985,697. Other hydrogels based on N-vinylpyrrolidone copolymers and acrylamide copolymers are disclosed in U.S. Patent Nos. 3,639,524 and 3,929,741. These prior hydrogel polymers generally suffer from several inherent problems:

a) relatively weak mechanical strength, low dissolved oxygen permeability or a combination of both and

b) most lenses are made by either of two procedures, one requiring costly lathing and polishing steps and the other using delicate spin casting techniques where polymerization, crosslinking, and shaping are done simultaneously.

Polyvinyl alcohol has also been proposed as a contact lens material. Several reagents have been suggested to crosslink PVA for this purpose: formalin and acid catalysis, Japanese Patent 72/06910; dialdehyde of PVA with PVA and acid catalysis, Japanese Patent application 50/115258; and glyoxal, U.S Patent No. 3,408,429. These PVA crosslinked materials suffer from hydrolyzable acetal or hemiacetal linkages.

Silberman and Kohn, ACS Polymer Preprints 24, 262 - 3, 465 - 6 (1983) and J. Polym. Sci. Chem. 23, 327 - 336 (1985) prepared 2-benzyloxyethylmethacrylate (BzOEMA) and graft polymerized it onto PVA by anionic and free radical catalysis. Membranes for contact lens applications were prepared by dissolving the PVA-graft-BzOEMA in dimethyl sulfoxide, casting it on a Teflon surface and immersing it in acetone to precipitate a film which is later swollen in water. However such graft polymerization is generally accompanied by oxidation and degradation of the PVA and by the orientation effects in the casting procedure thereby promoting anisotropy in the mechanical properties.

Grafted PVAs have also been made by procedures that do not involve the formation of a radical on a polymer backbone. For example:

In U.S. Patent 4,085,168 (1978) a PVA-graft copolymer useful as a hydrogel contact lens is made by first forming a hydrophobic macromer, such as polystyrene or polymethylmethacrylate, by an anionic mechanism and capping with a polymerizable (meth)acrylate group. This macromer is then copolymerized free radically with vinyl acetate. After hydrolysis of the acetate group a comb-like structure with a PVA backbone and pendant hydrophobic chains of similar molecular weight is produced. Though clear, transparent films can be produced by this method, the actual chemistry involves several complicated steps, some of which require moisture sensitive precautions.

Also in U.S. Patent 4,426,492 (1984) certain carboxylated PVA derivatives, useful as disposable, hydrogel soft contact lenses, are disclosed. It is broadly disclosed that certain carboxylated PVA derivatives may be internally plasticized by esterification with a polyglycolether such as poly(ethyleneglycol). However, esterification reactions are normally difficult to be precisely reproduced, and, in addition, mixing problems may be experienced due to phase separation of two high molecular weight polymers.

PVA has been reacted with isocyanates forming urethane linkages, for example:

In U.S. Patent 3,776,889 (1973) PVA has been fully reacted with allylisocyanate for use in a photoresist printing plate composition. In U.S. 3,928,299 (1975), isocyanatoethyl methacrylate (IEM) was reacted with certain hydroxyalkyl methacrylate containing polymers forming a urethane linkage and the polymer used in relief printing plates or circuits to form hard, insoluble coatings.

In U.S. Re. 27,401 (1972) Wichterle and Lim prepared a PVA-methacrylate i.e. a PVA that was esterified 1 % with methacrylic acid anhydride, dissolved the same to make a 25 % aqueous solution, and polymerized the mixture in a flat mold using potassium persulfate and sodium thiosulfate as initiator to form a hydrogel membrane. This type of hydrogel was disclosed for contact lens use. However, such lenses tend to be fragile.

Also in U.S. Patent 4,347,198 (1982) it is disclosed to mix a hydrophilic component, e.g. N-vinyl pyrrolidone, a hydrophobic component, e.g. methyl methacrylate, crosslinking agent and initiator in a solvent, e.g. dimethyl sulfoxide and crosslink the whole mixture in a mold. After equilibration in water a soft hydrogel contact lens is produced. Similarly a lens is disclosed as produced by mixing a polymethylmethacrylate with pendant vinyl groups with N-vinylpyrrolidone and polymerizing the mixture. It is also broadly disclosed to use a PVA esterified with methacrylic acid as the hydrophilic component of a contact

lens mixture.

In US-A-3,928,299 polymers which contain urethane groups and which are crosslinkable by vinyl polymerisation are disclosed. Said polymers comprise a backbone which is a hydroxyl group containing polymer. Said hydroxyl groups are reacted with vinyl monomers which contain isocyanate groups. Among the hydroxyl group containing polymers also polyvinyl alcohol is disclosed. Among the vinyl monomers isocyanatoethyl acrylate and methacrylate are preferred. However, there is no specific teaching of modifying polyvinyl alcohol with isocyanatoethyl acrylate or methacrylate. Furthermore, the amount of isocyanato compound used for introducing urethane groups onto a polymeric hydroxyl groups containing backbone is much higher than according to the present invention.

In EP-B1-47,321 there is a generic teaching that polyvinyl alcohol can be modified with an isocyanate. However, the amount of urethane groups introduced according to said patent specification is far beyond the amount of urethane groups which are present in the polymers according to the present invention. This can he easily seen from the statement in the prior art that polyvinyl alcohol and isocyanate are obtained at a rate of one molecule of the former to one or more molecules of the latter (page 4, lines 38/39). This statement makes clear that only polyvinyl alcohols are obtained according to said prior art of which all the hydroxy groups have been transformed into urethane groups.

Also according to EP-A-130,389 polyvinyl alcohols can be modified with an isocyanate. Again, the teaching is only generic and any details about the percentage of introducing urethane units into a polyvinyl alcohol backbone have not been disclosed.

It is an object of the present invention to provide polyvinyl alcohol derivatives containing (meth)acryloyl units which may be further reacted with a conventional vinylic monomer, and which can be crosslinked to form a soft water-swellable hydrogel contact lens having high mechanical strength, medium to high water content, superior optical clarity and high oxygen permeability.

It is a further object of the present invention to provide aqueous swollen contact lenses obviating, or substantially reducing, the drawbacks of the prior art.

It is a further object of the present invention to provide a method of preparing such contact lenses by crosslinking such polyvinyl alcohol containing (meth)acryloyl units or (meth)acryloyl unit-vinylic monomer reaction products in an organic aprotic solvent in a mold, such as a spin cast mold or a static cast mold, and equilibrating the resulting aprotic solvent swollen crosslinked contact lens in an aqueous medium.

The instant invention is therefore directed e.g. to a polymer as defined in claim 1. Preferred subembodiments thereof are disclosed in claims 2 to 29. Additional embodiments of the invention are disclosed in claims 30 to 40.

The instant invention, more specifically, provides a polymer which is a derivative of a polyvinyl alcohol having a weight average molecular weight of at least 2,000, and containing an effective amount between 0.5 and 90 percent, based on the number of hydroxylgroups on said polyvinyl alcohol, of units of the formula

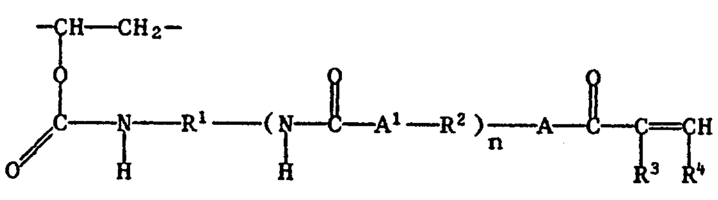

(I)

wherein $R^1$ and $R^2$ are independently alkylene of 2 to 8 carbon atoms, arylene of 6 to 12 carbon atoms, a saturated cycloaliphatic divalent group of 6 to 10 carbon atoms, arylenealkylene or alkylenearylene of 7 to 14 carbon atoms, or arylenealkylenearylene of 13 to 16 carbon atoms; n is 0 or 1; $A^1$ is oxygen or NR' where R' is hydrogen or lower alkyl; A is oxygen, NR'' or NHCONR'', where R'' is hydrogen or lower alkyl; $R^3$ is hydrogen or methyl; $R^4$ is hydrogen, methyl or $COOR^5$, where $R^5$ is hydrogen or lower alkyl with the proviso that if $R^3$ is methyl, $R^4$ is hydrogen, this polymer being an addition reaction product of units of formula I with from 0 to 80 units of a vinylic monomer per unit of formula I, taking into account the proviso as defined in claim 1.

By the expression "effective amount" is meant an amount between the recited ranges sufficient to result in a crosslinked polymer of sufficient mechanical properties so that the resultant crosslinked product is suitable for use as e.g. a contact lens material. As the artisan can appreciate, the amount of such units will vary depending on the nature of the units employed but can be easily determined empirically as described in the following examples.

If no units of a vinylic monomer are used, there are 0.5 to 20 percent, preferably from 1 to 20 percent, and more preferably from 2 to 20 percent, based upon the number of hydroxyl groups on the polyvinyl alcohol, of units of formula I in said polymer.

Alkylene $R^1$ or $R^2$ has preferably 2 to 6 carbon atoms, and is preferably straight chain alkylene. Suitable examples include propylene, butylene, hexylene, dimethylethylene and, most preferred, ethylene.

Arylene $R^1$ or $R^2$ is preferably phenylene which is unsubstituted or substituted by lower alkyl or lower alkoxy, and more preferably 1,3-or 1,4-phenylene or methyl-1,4-phenylene.

A saturated cycloaliphatic divalent group $R^1$ or $R^2$ is preferably cyclohexylene or cyclohexylene lower alkylene, e.g. cyclohexylene-methylene, which is unsubstituted or substituted by one or more methyl groups, such as trimethylcyclohexylenemethylene, e.g. the isophorone divalent radical.

The arylene moiety of alkylenearylene or arylenealkylene $R^1$ or $R^2$ is preferably phenylene which is unsubstituted or substituted by lower alkyl or lower alkoxy, and the alkylene moiety thereof is preferably lower alkylene, such as methylene or ethylene, most preferably methylene. Accordingly, such $R^1$ or $R^2$ is e.g. phenylenemethylene or methylenephenylene.

Arylenealkylenearylene is preferably phenylene lower alkylene phenylene having up to 3 carbon atoms in the alkylene moiety, e.g. phenylene ethylene phenylene.

Lower alkyl has up to 7 carbon atoms, preferably up to 4 and is e.g. methyl, ethyl, propyl, butyl and t-butyl.

Lower alkoxy has up to 7 carbon atoms, preferably up to 4 and is e.g. methoxy, ethoxy, propoxy, butoxy and t-butoxy.

Lower alkylene has up to 7 carbon atoms, preferably up to 4 and is e.g. methylene, ethylene, propylene and butylene.

The divalent group NH-CO-$A^1$-$R^2$ is present when n is 1 and absent when n is 0; those polymers wherein n is 0 are preferred.

$A^1$, when present, is preferably oxygen. When $A^1$ is an NR', R' is preferably hydrogen.

A is preferably -O-. When A is NHCONR'', R'' is preferably lower alkyl.

$R^3$ is preferably methyl.

$R^4$ is preferably hydrogen. Where $R^3$ is hydrogen, $R^4$ is preferably methyl or $COOR^5$, where $R^5$ is preferably methyl or ethyl.

Preferred are polymers which are derivatives of a polyvinyl alcohol, having a weight average molecular weight of at least 2,000, and containing from 0.5 to 90 percent, based on the number of hydroxyl groups in said polyvinyl alcohol, of units of the formula I, wherein $R^1$ and $R^2$ are independently alkylene of 2 to 6 carbon atoms, phenylene, unsubstituted or substituted by lower alkyl, cyclohexylene, cyclohexylene lower alkylene, unsubstituted or substituted by lower alkyl, phenylene lower alkylene, lower alkylene phenylene or phenylene lower alkylene phenylene, and n, $A^1$, A, $R^3$ and $R^4$ have the meaning as defined hereinbefore, these polymers being an addition reaction product of units of formula I with from 0 to about 80 units of a vinylic monomer per unit of formula I, taking into account the proviso as defined in claim 1.

Further preferred are said polymers wherein in formula I A is oxygen, $R^3$ is methyl, $R^4$ is hydrogen and either n is 0 and $R^1$ is alkylene of 2 to 6 carbon atoms or n is 1, $R^1$ is lower alkyl phenylene or lower alkyl cyclohexylene lower alkylene, $R^2$ is lower alkylene, and $A^1$ is oxygen or N-lower alkyl.

Most preferred are said polymers wherein in formula I $R^1$ to $R^4$, A, $A^1$ and n are defined as specified in the examples.

The polyvinyl alcohol polymer derivatives containing units of formula I may easily be prepared by reacting a polyvinyl alcohol, having a weight average molecular weight of at least 2,000, containing i.e. units of the formula

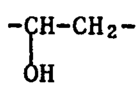

(II)

with 0.5 to 90 percent, based upon the number of hydroxyl groups in said poylvinyl alcohol, of an isocyanate of the formula

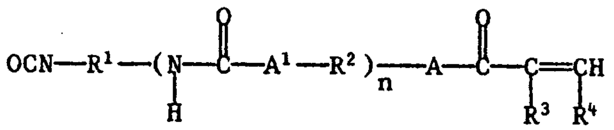

(III)

wherein $R^1$, $A^1$, $R^2$, n, A, and $R^3$ are as above defined, and $R^4$ is hydrogen, methyl or $COOR^5$ where $R^5$ is lower alkyl, at a temperature between about -10 °C to about 100 °C in the presence of a conventional aprotic solvent, in the further presence or absence of a catalytic amount of a urethane catalyst.

To obtain those polyvinyl alcohol polymer derivatives containing units of formula I wherein $R^5$ is hydrogen, the corresponding polymers wherein $R^5$ is lower alkyl can subsequently be treated with aqueous base, such as an alkali metal hydroxide aqueous solution, at an elevated temperature, e.g. between about 40 to about 80 °C, followed by neutralization of the resulting carboxylate salt with an acid, such as aqueous hydrochloric acid under ambient conditions.

Suitable aprotic solvents for conducting the reaction between the units of formula II and the isocyanate of formula III include formamide, dimethylformamide, phosphoric acid tri-dimethylamide, N-methyl-2-pyrrolidone, dimethylacetamide, acetamide, acetonitrile and preferably dimethyl sulfoxide.

Suitable urethane catalysts include tertiary amines, such as trimethylamine, triethylamine, N,N-dimethylbenzylamine, or an organometallic urethane catalyst, such as stannous octoate or dibutyltin dilaurate, or sodium acetate.

Polyvinyl alcohols containing units of the formula II are widely available.

Preferably, the polyvinyl alcohol has a weight average molecular weight of at least 10,000. As an upper limit, the polyvinyl alcohol may have a weight average molecular weight of up to 1,000,000. Preferably, the polyvinyl alcohol has a weight average molecular weight of up to 300,000, more preferably up to 100,000, most preferably up to 50,000.

Ordinarily, polyvinyl alcohol predominantly possesses a poly(2-hydroxy)ethylenestructure. However, the polyvinyl alcohol starting material may also contain hydroxyl groups in the form of 1,2-glycols, such as copolymer units of 1,2-dihydroxyethylene in the chain, obtained for example, by alkaline hydrolysis of vinyl acetatevinylene carbonate copolymers.

Moreover, the polyvinyl alcohol may contain minor amounts of copolymer units of ethylene, propylene, acrylamide, methacrylamide, dimethylacrylamide, hydroxyethyl methacrylate, methyl methacrylate, methyl acrylate, ethyl acrylate, vinyl pyrrolidone, hydroxyethyl acrylate, allyl alcohol, styrene and the like.

Commercial polyvinyl alcohol resin may be used such as Vinol® 107 manufactured by Air Products (MW = 22 - 31,000, 98 - 98.8 % hydrolyzed), Polysciences 4397 (MW = 25,000, 98.5 % hydrolyzed), BF 14 by Chan Chun, Elvanol® 90 - 50 by DuPont, UF-120 by Unitika, Mowiol® 10-98 and 20-98 by Hoechst. Some other manufacturers are Nippon Gohsei (Gohsenol®), Monsanto (Gelvatol®), Wacker (Polyviol®) as well as the Japanese manufacturers Kuraray, Denki and Shin-Etsu.

As noted above, copolymers of hydrolyzed vinyl acetate can be used and are commercially available such as hydrolyzed ethylene vinyl acetate (EVA), vinyl chloride-vinylacetate, N-vinyl pyrrolidone-vinyl acetate and maleic anhydride-vinyl acetate.

Polyvinyl alcohol is ordinarily prepared by hydrolysis of the corresponding homopolymeric polyvinyl acetate. In a preferred embodiment the polyvinyl alcohol contains less than 50 % polyvinyl acetate units, more preferably less than 20 % polyvinyl acetate units.

One method of roughly estimating the weight average molecular weight of polyvinyl alcohol is by the viscosity of a 4 % aqueous solution at 20 °C: for example a viscosity of 1 - 2 (cP) $\times 10^{-3}$ Pa.s corresponds to a molecular weight of ~ 3,000, a viscosity of 7 cP corresponds to a molecular weight of ~ 25,000 (98 - 100 % hydrolyzed), while a viscosity of 60 (cP) $\times 10^{-3}$ Pa.s corresponds to a molecular weight of ~ 130,000 (99 - 100 % hydrolyzed). Preferably the polyvinyl alcohol should have a minimum viscosity of 2 (cP) $\times 10^{-3}$ Pa.s and the upper limit of molecular weight is dictated by the ability to stir and pour solutions without introduction of air bubbles - this value is approximately 60 - 70 (cP) $\times 10^{-3}$ Pa.s. It is important to note that the manufacturers' claim of molecular weight (based on viscosity data) does not necessarily correspond to that obtained by gel permeation chromatography (GPC) which is dependent on the standards used. In Table 1 are presented a range of polyvinyl alcohols and the GPC results determined using polyacrylamide standards in aqueous solution.

Table 1

| PVA MOLECULAR WEIGHT COMPARISON | | | |
|---|---|---|---|
| Manufacturer | Manufacturers' Claimed | | GPC, $M_w$ |
| | $M_w$ | Viscosity (CPS *) $\times 10^{-3}$ Pa.s | |
| Polysciences | 133,000 | - | 66,000 |
| Scientific Polymer Products | 126,000 | 60 | 45,000 |
| Scientific Polymer Products | 115,000 | - | 69,000 |
| Shin-Etsu Poval C25 | 110,000 | 65 ± 5 | 38,000 |
| Air Products Vinol 350 | 106 - 110,000 | 55 - 65 | 43,000 |
| Hoechst, Moviol 66 - 100 | 100,000 | 66 ± 4 | 26,000 |
| DuPont, Elvanol HV | 100,000 | 55 - 65 | 50,000 |
| Polysciences | 78,000 | 28 - 32 | 37,000 |
| Sigma | 45,000 | 12 - 14 | 30,000 |
| Polysciences | 25,000 | 6 - 8 | 20,000 |
| Aldrich | 14,000 | - | 33,000 |
| Scientific Polymer Products | 14,000 | - | 22,000 |

*4 % aqueous solutions at 20 °C.

The weight average molecular weight ranges specified in this disclosure are those obtained by GPC using polyacrylamide standards in aqueous solution.

The isocyanates of formula III are known per se, or are easily prepared by conventional methods well known in the art (see U.S. Patent No. 2,958,704).

Where, in the compounds of formula III, n equals 1, the isocyanates can be prepared, for example, by reacting substantial equimolar amounts of a compound of the formula

$OCN\text{-}R^1\text{-}NCO$ (IV)

with a compound of the formula

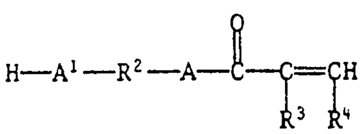

(V)

where $A^1$, $R^2$, A, $R^3$ and $R^4$ are as above defined. Occasionally, it is desirable to employ a substantial excess of the diisocyanate of formula IV in this reaction, in order to minimize the formation of by-product, and subsequently isolate the compound of formula III from the resulting reaction mixture by precipitation thereof, or by distilling off the excess isocyanate. The reaction between the compound IV and compound V can be conducted at a temperature between 0 °C and 100 °C in the presence or absence of an inert solvent. Suitable solvents include toluene, cyclohexane, methyl acetate, ethyl acetate, tetrahydrofuran, isopropylacetate, diethylether and the like. If desired, the reaction between IV and V may be conducted in the presence of a urethane catalyst of the type described above.

The compounds of formula IV and V are well known in the art. Suitable diisocyanates of formula IV include hexane-1,6-diisocyanate, tetramethylene diisocyanate, phenylene 1,4-diisocyanate, toluene-2,4-diisocyanate, toluene-2,6-diisocyanate, isophorone diisocyanate, cyclohexane 1,4-diisocyanate, and the like.

Suitable compounds of formula V include hydroxyethyl acrylate, hydroxypropyl acrylate, 4-hydroxyphenyl methacrylate, 2-hydroxyethyl maleate, hydroxyethyl methacrylate, t-butylaminoethyl methacrylate, and the like.

Many of the compounds of formula III wherein n is 0 are known or can be prepared by methods known in the art. Known compounds include 2-isocyanatoethyl methacrylate, 2-isocyanatoethyl acrylate, 3-isocyanatopropyl methacrylate, isocyanatobutyl acrylate and methacrylate, isocyanatohexyl acrylate and methacrylate, 1-methyl-2-isocyanatoethyl methacrylate and 1,1-dimethyl-2-isocyanatoethyl acrylate.

The compounds of formula III wherein n is 0 can generally be prepared by esterification of acryloyl or methacryloyl chloride with substantially equal molar amounts of the appropriate alkanol amine of formula (VI)

$H_2N$-$R^1$-OH (VI)

under acidic conditions followed by phosgenation, as described in U.S. Patent 2,821,544 (1958). The compounds of formula (VI) are conventional and well known in the art. More specifically the esterification reaction as well as the phosgenation reaction may be run using an inert, dry, high-boiling solvent such as toluene, xylene, chlorobenzene or dichlorobenzene at 50 - 200 °C for 1 to 20 hours. The alkanol amine can either be added in the salt form, preferably the hydrochloride salt, or in the free form with the solvent saturated with the dry acid e.g. dry hydrochloride gas. After formation of the ester, excess phosgene is passed into or over the rapidly stirring suspension (or solution) at 50 - 200 °C for 1 to 20 hours until evolution of hydrogen chloride ceases. The product is isolated by distillation.

The vinylic monomer which may be used according to the invention may be hydrophilic, hydrophobic or may be a mixture of hydrophilic and hydrophobic vinylic monomers. Suitable vinylic monomers include those conventional vinylic monomers generally employed in the fabrication of soft and hard contact lenses. By a hydrophilic vinylic monomer is meant a monomer which, when polymerized by conventional free radical polymerization, characteristically yields a polymer which either dissolves in water or is capable of absorbing at least 10 % by weight water under ambient equilibrium conditions. Similarly, suitable hydrophobic vinylic monomers are those monomers which, when polymerized by conventional free radical polymerization, characteristically yield a polymer which neither dissolves in water, nor is capable of absorbing at least 10 % by weight water under ambient (i.e. 20 °C) equilibrium conditions.

In general, between 0.01 and 80 units of conventional hydrophobic and/or hydrophilic monomer is reacted per unit of formula I.

If such a vinylic monomer is used, the polymers of the instant invention preferably contain at least 1 to 90 percent, more preferably at least 1.5 to 90 percent, based on the number of hydroxyl groups on the polyvinyl alcohol, of units of formula I, which are reacted with 0.01 to 80 units of conventional monomer.

In one preferred sub-embodiment of the instant invention, the polyvinyl alcohol derivative contains at least 1 to 20, preferably between 1.5 to 20 percent, based upon the number of hydroxyl groups on said polyvinyl alcohol of units of formula I, which are reacted with 0.01 to 80 units of a vinylic monomer per unit of formula I, more preferably between 0.5 to 30 units of vinylic monomer per unit of formula I, and most preferably between 2 to 20 units of vinylic monomer per unit of formula I present in the polyvinyl alcohol polymer. In this preferred sub-embodiment it is generally desirable to employ a hydrophobic vinylic monomer as the monomer reactant, or alternatively, a mixture of hydrophobic and hydrophilic monomers containing at least 50 weight percent of hydrophobic monomer, based upon total monomer reactant, is employed. The added hydrophobic monomer, or monomer mixture containing predominantly hydrophobic monomer, has been found to increase the mechanical strength of the ultimate final product soft contact lens material, to reduce in a generally predictable manner the amount of water contained in the contact lens material, and reduce the pore size of the contact lens material, thereby reducing the rate of accumulation of proteinaceous and non-proteinaceous debris associated with the normal day to day wearing and handling of contact lenses. Surprisingly, and most unexpectedly, the introduction of hydrophobic monomer, or monomer mixture containing at least 50 mole percent hydrophobic monomer, to the hydrophilic polyvinyl alcohol containing units of formula I does not, upon reaction, result in phase separation of the reaction product. Rather, the product is optically clear, indicating substantially no phase separation.

In an alternate preferred sub-embodiment of the instant invention, the polyvinyl alcohol derivative contains between 20 to 50 percent of units of the formula I, based upon said polyvinyl alcohol, which are reacted with 0.01 to 20, more preferably with 0.01 to 10, most preferably with 0.05 to 5 units of vinylic monomer, per unit of formula I present in the polyvinyl alcohol. In this alternate subembodiment, the vinylic monomer is hydrophobic or a mixture of hydrophobic monomer and hydrophilic monomer units, wherein up to 80 weight percent of the total vinylic monomer is hydrophilic. The incorporation of the hydrophilic vinylic monomer component tends to increase the water content, surface wettability and oxygen permeability of the resultant contact lenses. In this embodiment, it is most preferred to employ between 10 to 80 weight percent hydrophilic monomer based upon total added vinylic monomer for optimum results.

In a further sub-embodiment, the polyvinyl alcohol derivative contains between 50 to 90 percent of units of formula I, based upon said polyvinyl alcohol, which are reacted with 0.01 to 20, more preferably with 0.01 to 10, most preferably with 0.05 to 5 units of vinylic monomer, per unit of formula I present in the polyvinyl alcohol. In this sub-embodiment it has been found advantageous to employ, as vinylic monomer, a

hydrophilic vinylic monomer, or a mixture of hydrophilic an hydrophobic vinylic monomer wherein the hydrophilic component is predominant, e.g. wherein at least 50 percent by weight of total vinylic monomer employed is hydrophilic. In this embodiment, it is most preferred to employ a hydrophilic monomer or a monomer mixture containing between at least 50 percent to 99 percent by weight hydrophilic monomer, for optimum results.

As is evident from the above three preferred sub-embodiments, as the percent of formula I units increase, from 1 % to 90 %, based upon the hydroxyl units in the polyvinyl alcohol, the added vinylic monomer reacted therewith is generally increasingly hydrophilic in character for an optimum balance of performance characteristics, in terms of mechanical strength, water content, surface wettability and oxygen permeability.

Suitable vinylic monomers for polymerization with the polyvinyl alcohol derivative of formula I include conventional hydrophobic and hydrophilic monomers. Suitable hydrophobic monomers include, without limitation, $C_{1-18}$-alkyl acrylates and methacrylates, $C_{3-18}$-alkyl acrylamides and methacrylamides, acrylonitrile, methacrylonitrile, vinyl $C_{1-18}$-alkanostes, $C_{2-18}$-alkenes, $C_{2-18}$-haloalkenes, styrene, $C_{1-6}$-alkyl styrenes, vinyl alkyl ethers wherein the alkyl portion has 1 to 6 carbon atoms, $C_{3-12}$-perfluoroalkyl ethyl thiocarbonylaminoethyl acrylates and methacrylates, $C_{3-12}$-fluoroalkyl acrylates and methacrylates, acryloxy and methacryloxy alkyl siloxanes, N-vinyl carbazole, $C_{1-12}$-alkyl esters of maleic, fumaric, itaconic, and mesaconic acids and the like. Examples of suitable hydrophobic monomers include methyl acrylate, ethyl acrylate, propyl acrylate, isopropyl acrylate, cyclohexyl acrylate, 2-ethylhexyl acrylate, methyl methacrylate, ethyl methacrylate, propyl methacrylate, vinyl acetate, vinyl propionate, vinyl butyrate, vinyl valerate, styrene, chloroprene, vinyl chloride, vinylidene chloride, acrylonitrile, 1-butene, butadiene, methacrylonitrile, vinyl toluene, vinyl ethyl ether, perfluorohexylethylthiocarbonylaminoethyl methacrylate, isobornyl methacrylate, hexafluorobutylmethacrylate, 3-methacryloxypropylpentamethyldisiloxane, and bis-(methacryloxypropyl)tetramethyldisiloxane.

Suitable hydrophilic monomers include, without limitation, hydroxy substituted lower alkyl acrylates and methacrylates, acrylamide, methacrylamide, $C_{1-2}$- alkyl acrylamide and methacrylamide, ethoxylated acrylates and methacrylates, hydroxy substituted lower alkyl acrylamide and methacrylamide, hydroxy substituted lower alkyl vinyl ethers, sodium ethylene sulfonate, sodium styrene sulfonate, 2-acrylamido-2-methylpropanesulfonic acid, N-vinylpyrrole, N-vinylsuccinimide, N-vinyl pyrrolidone, 2- and 4-vinyl pyridine, acrylic acid, methacrylic acid, amino (by amino including quaternary ammonium) -monolower-alkylamino- or diloweralkylamino-lower alkyl acrylates or methacrylates, allyl alcohol, and the like.

Specific hydrophilic monomers include hydroxyethyl methacrylate, hydroxyethyl acrylate, acrylamide, methacrylamide, dimethylacrylamide, allyl alcohol, vinyl pyridine, vinyl pyrrolidone, glycerol methacrylate, N-(1,1-dimethyl-3-oxobutyl)acrylamide, and the like.

Preferred hydrophobic monomers are methyl methacrylate and vinyl acetate.

Preferred hydrophilic monomers are 2-hydroxyethyl methacrylate, N-vinyl pyrrolidone, and acrylamide.

The polyvinyl alcohol derivative of formula I is converted into a crosslinked polymeric hydrogel material, particularly useful as contact lens materials, by methods known to the art.

Thus, the polyvinyl alcohol derivative of formula I can be dissolved in a suitable organic solvent, such as lower alkanols, e.g. ethanol, methanol or the like, or an aprotic solvent such as dimethyl formamide, acetamide, acetonitrile, dimethylacetamide, dimethylsulfoxide or mixtures thereof. Also aqueous/organic solvent systems may be employed.

Alternatively, the vinylic monomers are combined with the polyvinyl alcohol derivative of formula I advantageously in the presence of an inert diluent or solvent, such as a suitable organic solvent, including a lower alkanol, e.g. ethanol, methanol or the like, or an aprotic solvent such as dimethylformamide, acetamide, acetonitrile, dimethylacetamide, dimethylsulfoxide or mixtures thereof. Also, aqueous/organic solvent systems may be employed.

The crosslinking of the solvent solution of the polymer containing groups of formula I or of the vinylic monomer, or blend of vinylic monomers, combined with the polyvinyl alcohol derivative containing groups of formula I, is conducted avantageously in the presence of a conventional free radical initiator, such as a peroxide, e.g. di-tert-butyl peroxide, benzoyl peroxide, lauryl peroxide, decanoyl peroxide, acetyl peroxide, succinic acid peroxide, methyl ethyl ketone peroxide, 2,4-dichlorobenzoyl peroxide, isopropyl peroctoate, tert-butyl hydroperoxide, tert-butyl perpivalate, tert-butyl peroctoate, diisopropyl peroxydicarbonate, cumene hydroperoxide, tert-butyl perbenzoate, tert-butyl peroxymaleic acid, tert-butyl peroxyacetate, and potassium persulfate, an azo compound, e.g. 2,2'-azo-bis-isobutyronitrile, 2,2'-azo-bis-(2,4-dimethylvaleronitrile), 1,1'-azo-bis-(cyclohexane carbonitrile), 2,2'-azo-bis(2,4-dimethyl-4-methoxyvaleronitrile) and phenyl azo isobutyronitrile, or in the presence of a photoinitiator, e.g. benzoin methyl ether and 1-hydroxycyclohexylphenyl ketone and actinic radiation such as UV light, or ionizing rays e.g. gamma rays or X-rays.

The solution of polyvinyl alcohol derivative of formula I or the mixture thereof with monomer is advantageously polymerized upon placement into a mold. The mold may be a conventional spin-casting mold for preparing contact lenses such as described in U.S. Patent No. 3,408,429, or in a static mold, e.g. as described in U.S. Patent No. 4,347,198. Alternately, one may prepare a swollen lens blank, dry the lens blank to form the corresponding xerogel, shape the xerogel into a contact lens precurser by lathing methods known to the art, and swell the shaped xerogel in aqueous medium to form the corresponding contact lens, as described in Reissue U.S. Patent No. 27,401.

The solution of polyvinyl alcohol derivative of formula I or the mixture thereof with vinylic monomer are advantageously placed into a mold in shape of a contact lens. Where the solvent employed is a strong swelling solvent, such that the resultant crosslinked polymer shrinks in size upon equilibration with aqueous or aqueous saline solution, typically between about 10 to about 35 percent based on diameter, the mold is suitably enlarged to compensate for the post treatment shrinkage. Optimally the post treatment further includes a heat treatment of the molded lens shaped polymer. Such heat treatment is characteristically conducted at a temperature between about 60 to 100 °C, e.g. in the presence of an aqueous medium. This treatment may result in a further slight shrinkage, generally less than 15 % based on diameter. The treatment can vary greatly, but usually is accomplished in about 5 to 90 minutes. The purpose of this post treatment is to dimensionally stabilize the crosslinked contact lens material. Also, the treatment may further serve to sterilize such lens material.

Optionally, an additional conventional polyreactive crosslinking agent may be added, such as allyl compounds e.g. allyl methacrylate, diallyl itaconate, monoallyl itaconate, dially maleate, diallyl fumarate, diallyl succinate, diallyl phthalate, triallyl cyanurate, triallyl isocyanurate, diethylene glycol bis-allyl carbonate, triallyl phosphate, triallyl trimellitate, allyl ether, N,N-diallylmelamine; vinyl compounds, e.g. divinyl benzene, N,N'-methylene bis acrylamide, ethylene glycol dimethacrylate, neopentylglycol dimethacrylate, tetraethylene glycol dimethacrylate, hexamethylene bis maleimide, divinyl urea, bisphenol A bis methacrylate, divinyl adipate, glycerin trimethacrylate, trimethylolpropane triacrylate, trivinyl trimellitate, 1,5-pentadiene, 1,3-bis(4-methacryloxybutyl) tetramethyl disiloxane, divinyl ether and divinyl sulfone; hydroxyl reactive compounds such as: polyvalent isocyanates e.g. hexamethylene diisocyanate, isophorone diisocyanate, toluene diisocyanate; polyaldehydes e.g. glutaraldehyde and glyoxal; polyacids e.g. glutaric acid and oxalic acid; polyepoxides e.g. butane diepoxide, vinylcyclohexene dioxide and butanediol diglycidyl ether; polyols (acid catalysis) e.g. dimethylol urea and diethylene glycol.

When employed, about 0.01 to 10 weight percent of crosslinking agent, based upon the weight of formula I derivative, may be present, preferably about 0.01 to about 5 percent, most preferably about 0.05 to 2 weight percent.

The resultant contact lenses are optically clear, strong, flexible, highly oxygen permeable and wettable. Further, the instant lenses are characterized by their ease of manufacture.

In the following examples, all parts are by weight unless otherwise described.

Example 1: This example illustrates a range of water contents obtained using different levels of isocyanatoethyl methacrylate (IEM) with a polyvinyl alcohol (PVA) of weight average molecular weight (MW) of ~ 26,000 in the absence or presence of methyl methacrylate (MMA) and vinyl acetate (VA) as comonomers.

3 g Air Products Vinol® 107 (MW = 22 - 31,000, 98 - 98.8 % hydrolyzed) PVA is dissolved in 27 g Aldrich Gold Label (99.9 %) dimethyl sulfoxide (DMSO) under house nitrogen at 60 °C (approximately 0.5 hour) in a three neck round bottom flask with overhead stirring. The solution is allowed to cool to room temperature (RT) (approximately 1 hr.). Then 2.6 (0.25 ml), 3.6 (0.35 ml), 5.2 (0.5 ml), 6.2 (0.6 ml), or 10.4 (1 ml) mole % (with respect to vinyl alcohol), Dow Chemical Developmental Monomer, isocyanatoethyl methacrylate (IEM), is added dropwise over 1.5 minutes and reacted at RT for 1 hour with vigorous stirring.

A given amount of IEM reacted PVA is combined with comonomer (MMA or VA) and initiator (1-hydroxycyclohexylphenyl ketone), mixed well, poured into flat "sandwich" molds and polymerized with UV light (360 nm) at room temperature for 1 hour. Samples 1, 4, 7, 11 and 17 are made in a similar manner but without the addition of comonomer. In example 1, PVA and monomer are listed as a weight percent of PVA plus monomers. The initiator is listed as a percent of the total reaction solution.

The polymerized films are removed from the molds and extracted sucessively in 50 %, 25 %, 0 % DMSO/water solutions. They are extracted several times in water and boiled for 10 minutes before % $H_2O$ content is determined.

Diameters are measured on disks cut from films before extraction and after boiling.

Table of Example 1    PVA = Air Products Vinol® 107, 22 - 31,000 MW/98 - 98.8 % Hydrolyzed

| Sample | Mole % IEM | % PVA | % Monomer | % Initiator | % $H_2O$ Content | % Diameter Change (Initial to Boiled) |
|---|---|---|---|---|---|---|
| 1 | 2.6 → | 100 | 0 | 0.05 | 85.14 | - 12.0 |
| 2 | | 89.7 | 10.3 MMA | 0.04 | 78.82 | - 16.9 |
| 3 | | 79.3 | 20.7 MMA | 0.03 | 75.88 | - 19.7 |
| 4 | 3.6 → | 100 | 0 | 0.03 | 83.63 | - 13.0 |
| 5 | | 90.7 | 9.3 VA | 0.04 | 79.49 | - 18.1 |
| 6 | | 89.5 | 10.5 MMA | 0.04 | 78.74 | - 20.6 |
| 7 | 5.2 → | 100 | 0 | 0.03 | 79.32 | - 17.3 |
| 8 | | 88.9 | 11.1 VA | 0.03 | 75.60 | - 18.1 |
| 9 | | 89.3 | 10.7 MMA | 0.03 | 74.41 | - 21.7 |
| 10 | | 79.8 | 20.2 MMA | 0.03 | 68.67 | - 24.8 |
| 11 | 6.2 → | 100 | 0 | 0.03 | 76.20 | - 19.4 |
| 12 | | 90.2 | 9.8 VA | 0.04 | 73.49 | - 17.8 |
| 13 | | 88.7 | 11.3 MMA | 0.03 | 70.37 | - 23.6 |
| 14 | | 78.5 | 21.5 MMA | 0.03 | 64.72 | - |
| 15 | | 65.6 | 34.4 MMA | 0.04 | 55.70 | - |
| 16 | 10.4 → | 91.2 | 8.8 VA | 0.03 | 75.36 | - |
| 17 | | 100 | 0 | 0.04 | 74.80 | - |
| 18 | | 88.8 | 11.2 VA | 0.03 | 69.35 | - 20.4 |
| 19 | | 89.7 | 10.3 MMA | 0.03 | 67.21 | - 24.4 |
| | | | | | | - 24.5 |
| 20 | | 83.4 | 16.6 MMA | 0.05 | 66.98 | - |
| 21 | | 75.6 | 24.4 VA | 0.03 | 66.73 | - |
| 22 | | 52.3 | 47.7 VA | 0.03 | 60.47 | - 23.3 |
| 23 | | 76.0 | 24.0 MMA | 0.04 | 58.08 | - 29.6 |
| 24 | | 65.0 | 35.0 MMA | 0.03 | 54.72 | - |
| 25 | | 54.5 | 45.5 MMA | 0.03 | 43.81 | - 31.4 |

As shown above in the samples containing no additional monomer, with increasing IEM concentration, the water content of films steadily decreases from ~ 85 % (2.6 mole % IEM) to ~ 75 % (10.4 mole % IEM). Also as the corresponding water content decreases the diameter changes become larger.

As the proportion of added monomer is increased, the corresponding water content decreases and diameter changes become larger (e.g. samples 7 and 10).

Example 2: This example shows the wide range in water content achieved using a PVA, weight average molecular weight (MW) = 86,000 (100 % hydrolyzed) modified with different levels of isocyanatoethyl methacrylate (IEM) and polymerized in the absence or presence of different levels of methyl methacrylate (MMA) and vinyl acetate (VA). Films are made as in example 1 except that 3 g of Scientific Polymer

Products 86,000 MW PVA is dissolved in 37 g DMSO and IEM is diluted with DMSO before addition.

Table of Example 2

PVA = Scientific Polymer Products 86,000 MW/100 % Hydrolyzed

| Sample | Mole % IEM | % PVA | % Monomer | % Initiator | % $H_2O$ Content | % Diameter Change (Initial to Boiled) |
|---|---|---|---|---|---|---|
| 1 | 2.6 | 100 | 0 | 0.03 | 84.33 | - 19.1 |
| 2 | 2.6 | 85.8 | 14.2 VA | 0.02 | 80.00 | - 22.5 |
| 3 | 2.6 | 87.6 | 12.4 MMA | 0.04 | 78.34 | - 24.6 |
| 4 | 10.4 | 100 | 0 | 0.03 | 74.57 | - 21.5 |
| 5 | 10.4 | 87.2 | 12.8 MMA | 0.07 | 73.50 | - |
| 6 | 10.4 | 85.2 | 14.8 VA | 0.03 | 71.83 | - 20.7 |
| 7 | 10.4 | 88.4 | 11.6 VA | 0.03 | 69.96 | - |
| 8 | 10.4 | 84.4 | 15.6 MMA | 0.04 | 67.63 | - 29.1 |
| 9 | 10.4 | 43.5 | 56.5 MMA | 0.03 | 39.23 | - 37.5 |

As shown above, by adding additional monomer the water content decreases from ~ 80 % (Sample 2) to ~ 39 % (Sample 9) with a corresponding % diameter change of - 22.5 and - 37.5. Tensile properties of films made from this PVA are highly dependent on % IEM incorporation. At low (2.6 %) IEM the films are elastic and weak but at high (10.4 %) IEM incorporation the films are brittle and weak.

Example 3: This example shows the effect of partially hydrolyzed PVA and added comonomers on the copolymer product. Films are made as in example 1 except that Vinol® 205 (87 - 89 % hydrolyzed) of weight average molecular weight (MW) 22 - 31,000 is used.

| Sample | Mole % IEM | % PVA | % Monomer | % Initiator | % $H_2O$ Content | % Diameter Change (Initial to Boiled) |
|---|---|---|---|---|---|---|
| 1 | 10.4 | 100 | 0 | 0.04 | 71.94 | - 22.4 |
| 2 | ↓ | 90.0 | 10.0 VA | 0.03 | 68.39 | - 18.3 |
| 3 | | 90.0 | 10.0 MMA | 0.04 | 65.90 | - 26.3 |

VA = vinyl acetate, MMA = methyl methacrylate

On comparing the above table with example 1 it can be seen that lowering the percent hydrolysis of PVA has little if any effect on water content and % contraction from the mold to the fully swollen state. There is no difference in the mixing (related to a lower PVA solution viscosity) of this lesser hydrolyzed compared to the fully hydrolyzed PVA of the same molecular weight.

Example 4: This example illustrates the effect of long term heating on a PVA copolymer film. The film is made as in example 1. Tensile testing is done on an Instron. A polymerized hydroxyethyl methacrylate (pHEMA) film containing 1 % ethylene glycol dimethacrylate (EGDMA) is used as a comparison sample.

Table of Example 4

| Composition | % $H_2O$ | Treatment | Tensile Data: Breaking Strength ($kg/cm^2$) | Tensile Data: % Elongation | Tensile Data: Young's Modulus ($kg/cm^2$) |
|---|---|---|---|---|---|
| 6.2 mole % IEM, 64.9 % PVA, 35.1 % MMA, 0.03 % Initiator | ~ 56 | Equilibrated in saline | 14.3 | 50 | 34 |
| ↓ | | Heated in saline, boiled 2 hours then 92°, 70 hours | 18.3 | 48 | 44 |
| pHEMA (1 % EGDMA) | 37 | None | 3.5 | 48 | 13 |

IEM = isocyanatoethyl methacrylate; MMA = methyl methacrylate

As illustrated above, subjecting the PVA-IEM-MMA film to the above heat treatment increases its tensile strength with a slight decrease in its % elongation. The film has a tensile strength 5 to 6 times that of a pHEMA film.

Example 5: This example shows the effect of increasing vinyl acetate content at several different levels of isocyanatoethyl methacrylate (IEM) modification. Films are made according to example 1 using Scientific Polymer Products weight average molecular weight (MW) 14,000 (100 % hydrolyzed) PVA and are modified with 2.6, 10.4, 12.4 or 20.7 mole % of IEM.

The tensile strength of 1"x3" strips cut from films are measured on a Visco-Tech apparatus. The Visco-Tech, composed of a moving stage and solitary spring and meter is similar to an Instron, typically used for tensile testing, however a much smaller force can be accurately measured on the Visco-Tech. To obtain stress-strain points between zero stress-strain and that at break, a strip of paper is set up so that at various forces, e.g. 25 g, 50 g, a small drop of ink is dropped on this strip recording the corresponding elongation.

Table of Example 5

| Mole % IEM | % PVA | % Vinyl Acetate | % Initiator | % $H_2O$ Content | Tensile % Elongation | Stress psi | Stress $kg/cm^2$ |
|---|---|---|---|---|---|---|---|
| 2.6 | 92.7 | 7.3 | 0.025 | 84.2 | 75.0 | 17.2 | 1.21 |
| ↓ | 85.7 | 14.3 | 0.052 | 83.0 | 116.7 | 25.3 | 1.78 |
| | 80.2 | 19.8 | 0.076 | 81.9 | 91.7 | 21.7 | 1.53 |
| | 72.8 | 27.2 | 0.12 | 80.0 | 108.3 | 22.5 | 1.58 |
| | 71.3 | 28.7 | 0.12 | 79.7 | 83.3 | 16.4 | 1.15 |
| 10.4 | 92.8 | 7.2 | 0.02 | 70.9 | 75.0 | 51.5 | 3.62 |
| ↓ | 86.4 | 13.6 | 0.03 | 69.6 | 58.3 | 34.4 | 2.42 |
| | 79.8 | 20.2 | 0.06 | 68.1 | 83.3 | 52.4 | 3.68 |
| | 68.8 | 31.2 | 0.11 | 65.4 | - | - | - |
| 12.4 | 92.1 | 7.9 | 0.0096 | 69.3 | 50.0 | 41.6 | 2.92 |
| ↓ | 85.0 | 15.0 | 0.021 | 68.3 | 58.3 | 42.3 | 2.97 |
| | 77.9 | 22.1 | 0.034 | 66.7 | 83.3 | 43.7 | 3.07 |
| | 71.4 | 28.6 | 0.047 | 65.4 | 75.0 | 46.8 | 3.29 |
| | 68.0 | 32.0 | 0.054 | 64.7 | 58.3 | 42.2 | 2.97 |
| 20.7 | 100 | 0 | 0.03 | 60.7 | 83.3 | 14.26 | 1.00 |
| ↓ | 93.0 | 7.0 | 0.03 | 59.8 | - | > 16.3 | > 1.10 |

In general, as the % IEM is increased the water content drops and as the amount of comonomer vinyl acetate is increased, at any particular level of IEM, the water content also drops, approximately 4 % for every 10 % modification with vinyl acetate. If one compares 2.6 to 10.4 mole % IEM, accompanying the decrease in water content, the tensile stress roughly doubles and the % elongation decreases by approximately 20 %.

Example 6: This example compares three comonomers which differ in their degree of hydrophobicity: vinyl acetate (VA), methyl methacrylate (MMA) and a perfluoromethacrylate, PFM ($C_6F_{13}$-$C_2H_4$-SCONH-$C_2H_4$-OCO-$C(CH_3)=CH_2$). Films are made according to the procedure in example 1, except that Scientific Polymer Products weight average molecular weight (MW) 14,000 (100 % hydrolyzed) PVA is used.

Table of Example 6

Isocyanatoethyl methacrylate = 10.4 mole %

| % PVA | % Monomer | % Initiator | % $H_2O$ Content |
|---|---|---|---|
| 100.0 | 0 | 0.03 | 75.1 |
| 93.4 | 6.6 VA | 0.03 | 72.3 |
| 85.9 | 14.1 VA | 0.02 | 72.3 |
| 78.7 | 21.3 VA | 0.03 | 71.3 |
| 73.1 | 26.9 VA | 0.04 | 69.6 |
| 68.3 | 31.7 VA | 0.05 | 67.6 |
| 60.2 | 39.8 VA | 0.03 | 62.5 |
| 34.6 | 65.4 VA | 0.04 | 52.7 |
| 93.0 | 7.0 MMA | 0.03 | 70.1 |
| 80.6 | 19.4 MMA | 0.06 | 61.5 |
| 73.0 | 27.0 MMA | 0.03 | 55.9 |
| 57.6 | 42.4 MMA | 0.04 | 49.0 |
| 92.4 | 7.6 PFM | 0.04 | 67.5 |
| 85.1 | 14.9 PFM | 0.06 | 63.8 |
| 81.5 | 18.5 PFM | 0.06 | 62.7 |
| 72.9 | 27.1 PFM | 0.04 | 60.2 |
| 57.5 | 42.5 PFM | 0.04 | 55.4 |

As indicated above, these three compositions show a decrease in water content with increase in monomer content with the MMA containing compositions demonstrating the most dramatic decrease, being extremely hydrophobic, and vinyl acetate the least dramatic decrease, being the least hydrophobic. Monomer hydrophobicity is only part of the explanation for the water content, the amount actually incorporated being another factor.

Example 7: This example shows that optically clear materials of good mechanical strength can be made with combinations of hydroxyethyl methacrylate (HEMA), a hydrophilic monomer, and vinyl acetate (VA) with or without the additional crosslinker ethylene glycol dimethacrylate (EGDMA). Films are made according to example 6. Tensile testing is done as in Example 5.

Table of Example 7

Isocyanatoethyl methacrylate = 6.2 mole %

| Weight Percent Reactant | | | | % Initiator | % $H_2O$ Content | Tensile | | |
|---|---|---|---|---|---|---|---|---|
| PVA | VA | HEMA | EGDMA | | | Breaking kg/cm² | Strength psi | Elongation |
| 86.3 | 5.1 | 8.5 | 0 | 0.14 | 81.8 | 1.79 | 25.5 | 97 |
| 85.7 | 9.9 | 4.4 | 0 | 0.10 | 79.7 | 1.11 | 15.7 | 45 |
| 84.6 | 8.5 | 5.6 | 1.3 | 0.096 | 81.4 | 0.98 | 14.6 | 50 |
| 84.7 | 5.2 | 8.7 | 1.4 | 0.10 | 80.5 | 1.89 | 26.9 | 112 |
| 83.5 | 6.3 | 8.0 | 2.2 | 0.10 | 81.2 | 1.24 | 17.7 | 67 |
| 81.4 | 8.8 | 6.7 | 3.1 | 0.19 | 80.7 | 1.78 | 25.2 | 146 |

As shown above, all these compositions have ~ 81 % water content. Considering their level of water content they have good mechanical strength coupled with good % elongation.

Example 8: This example shows the dimensional expansion and contraction of a 56 % water content disk in 3 % buffered $H_2O_2$ simulatedlens disinfection solution. Disks cut from sheets made according to the procedure in example 1 (0.03 % initiator) contain 6.2 mole % isocyanatoethyl methacrylate (IEM), 64.9 % PVA and 35.1 % methyl methacrylate (MMA). After extraction and water swelling the sheets are equilibrated in phosphate buffered saline, pH 7.4 (0.8 % NaCl, 0,17 % $Na_2HPO_4.7H_2O$, 0.02 % KCl, 0.02 % $KH_2PO_4$ - (w/v in 100 ml $H_2O$)). Disks (0.25 mm thick) cut from the sheets and initial diameters read are then subsequently treated in 3 % $H_2O_2$ buffered saline, pH 7.1 (10 ml 30 % $H_2O_2$ (aq.) + 90 ml buffered saline). Following the peroxide treatment the disks are soaked in buffered saline containing 4 % $Na_2S_2O_5$ for 1 minute (to quench the peroxide) and then transferred to buffered saline.

| | | |
|---|---|---|
| Initial Diameter in buffered saline | | 14.72 ± 0.02 mm |
| Diameter after equilibration in $H_2O_2$ | | 14.82 ± 0.01 |
| Equilibration time in $H_2O_2$ | | 10 min. |
| Diameter in saline after | 3 min. | 14.69 ± 0.03 |
| | 7 min. | 14.68 ± 0.05 |
| | 10 min. | 14.70 ± 0.07 |
| | 15 min. | 14.66 ± 0.04 |
| | 20 min. | 14.67 ± 0.03 |
| | 30 min. | 14.67 ± 0.01 |
| | 60 min. | 14.73 ± 0.04 |
| | 3 hours | 14.70 ± 0.07 |

After a 10 minute soak in buffered 3 % $H_2O_2$ a disk swells 0.7 % and retracts to its original size after 3 minutes in buffered saline.

Example 9: This example shows the Shore-A (wet) hardness of some samples of ~ 58 % water content and their corresponding dimensional contraction.

Shore-A (wet) hardness testing is performed on a stack of 4 to 5 rectangular sheets (~ 0.7 mm thick). Films containing the comonomers methyl methacrylate (MMA), ethylhexyl acrylate (EHA) or isobornyl methacrylate (IBMA) and 6.3 mole % isocyanatoethyl methacrylate (IEM) are made according to the procedure given in example 1. Due to their hydrophobicity, the IBMA and EHA monomers cannot be dissolved in the PVA solution at a concentration greater than ~ 26 %. A polymerized hydroxyethyl methacrylate (pHEMA) film containing 1 % ethylene glycol dimethacrylate (EGDMA) is used as a comparison sample.

Table of Example 9

| Mole % IEM | % PVA | % Monomer | % Initiator | % $H_2O$ Content | % Diameter Change | Shore-A (wet) Hardness |
|---|---|---|---|---|---|---|
| 6.2 | 76.0 | 24.0 % EHA | 0.03 | 59.96 | - 29.71 | 49 |
| 6.2 | 74.6 | 25.4 % IBMA | 0.03 | 58.63 | - 27.27 | 65 |
| 6.2 | 64.9 | 35.1 % MMA | 0.03 | 57.18 | - 30.89 | 63 |
| 6.2 | 64.9 | 35.1 % MMA | 0.03 | - | - | 65 |
| Boiled 36 hr. in saline | | | | | | |
| pHEMA (in saline) | | | - | 36.49 | - | 40 |

As shown above, the wet hardness ranges from 63 - 65 for 35.1 % MMA or 25.4 % IBMA containing compositions, but is lower (49), for the 24.0 % EHA containing film. By this measurement technique a 37 % water content pHEMA film has a wet hardness of 40.

Example 10: This example compares the properties of some 56 - 62 % water content films containing methyl methacrylate (MMA) and 2-ethylhexyl acrylate (EHA).

Films are made according to example 1, except that benzoin methyl ether (BME) is used as the initiator replacing 1-hydroxycyclohexylphenyl ketone. It is found that BME catalysis behaves differently in EHA and MMA containing systems - two to three times more BME than 1-hydroxycyclohexylphenyl ketone is needed to achieve a similar product in the EHA polymerization whereas no increase in catalyst is needed for the

MMA containing system.

Table of Example 10

Isocyanatoethyl methacrylate = 6.2 mole %

| Sample | % PVA | % Mono-mer | % BME | % $H_2O$ Con-tent | % Diameter Change | Tensile (Saline) | | | Shore-A (Wet) Hard-ness ($H_2O$ Swollen) |
|---|---|---|---|---|---|---|---|---|---|
| | | | | | Initial to Boiled | Young's Modulus $10^5$ dyne/cm² | Stress at Break $10^5$ dyne/cm² | % Elonga-tion | |
| 1 | 72.4 | 27.6 MMA | 0.03 | 61.31 | - 26.45 | 213 ± 5 | 81 ± 13 | 43.3 | 48 |
| 2 | 72.5 | 27.5 MMA | 0.04 | 62.64 | - 26.57 | 156 ± 10 (15.9 kg/cm²) | 76 ± 9 (7.7 kg/cm²) | 58 ± 8 | 38 |
| 3 | 72.7 | 27.3 MMA | 0.04 | 61.56 | - 29.24 | 175 ± 17 | 71 ± 14 | 47 ± 8 | 43 |
| 4 | 75.0 | 25.0 EHA | 0.10 | 56.28 | - 30.90 | 173 ± 21 (17.6 kg/cm²) | 62 ± 17 (6.3 kg/cm²) | 48 ± 20 | 43 |
| 5 | 79.6 | 20.4 EHA | 0.08 | 59.13 | - 30.12 | 178 ± 5 | 62 ± 9 | 42 ± 7 | 54 |
| 6 | 64.9 | 35.1 MMA | 0.03* | 56 | - | 34 kg/cm² | 14.3 kg/cm² | 50 | - |

*1-hydroxycyclohexylphenyl ketone

1 kg/mm² = 981 x $10^5$ dyne/cm²

As shown above, i.e. samples 1 - 5, similar mechanical properties are observed when MMA is replaced by EHA. A 56 % water content EHA containing film (Sample 4) has a similar % elongation (48) as a 56 % water content MMA containing control film, sample 6 (50) - however, the stress at break and the modulus

are reduced by half.

Raising the water content of a 6.2 mole % IEM, MMA film from 56 (Sample 6) to 62 % (Sample 2) by decreasing the MMA contained in the film leads to a slight increase in % elongation with the stress at break and modulus halved.

Example 11: Several prototype lenses are fabricated in contact lens molds (TPX) made from poly(α-methyl pentene). The reaction solution is made as in example 1 with 6.2 mole % isocyanatoethyl methacrylate, 34.0 % MMA and 0.06 % benzoin methyl ether (initiator). The solution is pipetted into the lens molds and UV cured for 1 hour. The lenses come out optically clear with no obvious difference in strength or swelling relative to a sheet made of similar composition.

Another reaction solution is made as in example 1 with 2.02 g of a 10 % Vinol® 107 solution in DMSO modified with 10.4 mole % isocyanatoethyl methacrylate and with 0.0014 g benzoin methyl ether (initiator). The solution is pipetted into lens molds and UV cured for 1 1/4 hours at room temperature. The clear lenses are removed from the molds, washed in water and boiled for 10 minutes. The water swollen lenses are clear and resilient.

Example 12: In this example the effect of an added DMSO stabilizer, triethanolamine (TEA), on some film properties is tested. Films are made both in the presence (~ 0.45 %) and absence of TEA according to example 1 with 6.2 (0.6 ml) or 5.7 (0.55 ml) mole % isocyanatoethyl methacrylate (IEM) using benzoin methyl ether (BME) as the initiator.

Table of Example 12

| Mole % IEM | % PVA | % MMA | % BME | % TEA* | % $H_2O$ | % Diameter Change (Initial to Boiled) |
|---|---|---|---|---|---|---|
| 6.2 | 72.5 | 27.5 | 0.04 | 0 | 62.64 | - 26.6 |
| 6.2 | 72.5 | 27.5 | 0.04 | 0.45 | 60.87 | - 27.0 |
| 5.7 | 69.9 | 30.1 | 0.04 | 0 | 59.51 | - 28.5 |
| 5.7 | 69.7 | 30.3 | 0.04 | 0.44 | 62.44 | - 27.2 |

* % of total weight of reaction mixture

As shown above TEA has little or no effect on the percent contraction of the film from the mold after water swelling or its water content.

Example 13: This example illustrates the effect of initial reactant concentration on various physical properties of the resultant water equilibrated film.

PVA solutions are made according to example 1. To 30 g of a 10 % PVA solution (Air Products Vinol® 107), 4,825 ml of isocyanatoethyl methacrylate (IEM) is added dropwise under nitrogen with rapid stirring. Then 0.49 g of methyl methacrylate (MMA) and 0.007 g of initiator, benzoin methyl ether (BME), is added to the PVA-IEM solution (Sample 1). Two other samples (2 and 3) are made in a similar manner but to which additional DMSO is added diluting the reactants to the values indicated in the table. The initiator level is based on the total weight of reactants and the % BME in the table is the value calculated based on the total weight of solution. The films are polymerized and equilibrated as in example 1.

Table of Example 13

PVA = Air Products Vinol® 107, 22 - 31,000 MW/98 - 98.8 % Hydrolyzed, Isocyanatoethyl Methacrylate = 50 mole %

| Sample | % PVA | % MMA | % BME | % Reactants in Reaction Mixture | % $H_2O$ | % Diameter Change (Initial to Boiled) | Tensile (Saline) | | | Shore A (Wet) Hardness |
|---|---|---|---|---|---|---|---|---|---|---|
| | | | | | | | Young's Modulus $10^5$ dyne/$cm^2$ | Stress at Break $10^5$ dyne/$cm^2$ | % Elongation | |
| 1 | 72.5 | 27.5 | 0.04 | 25.91 | 34.73 | - 26.8 | 13040 | 485 | 16 | 92 |
| 2 | 72.7 | 27.3 | 0.03 | 15.72 | 37.57 | - 39.2 | 9909 | 353 | 70 | 90 |
| 3 | 72.3 | 27.7 | 0.02 | 9.31 | 43.61 | - 47.8 | - | - | - | 60 |

MMA = methyl methacrylate, BME = benzoin methyl ether   1 kg/$mm^2$ = 981 x $10^5$ dyne/$cm^2$

As shown above, when the initial reaction mixture is more dilute, the final water equilibrated film has higher water content, lower tensile strength and Shore A (wet) hardness, and greater % elongation. Also with increased reactant dilution the % diameter change on going from the mold to the final water equilibrated state increases.

Example 14: This example is a listing of PVA films made in a similar manner to that in example 1 and containing various hydrophobic comonomers. Use of a high level of bis(methacryloxypropyl)-tetramethyldisiloxane makes probable its functioning both as a monomer and crosslinking agent.

Table of Example 14

PVA = Air Products Vinol® 107,

22 - 31,000 MW/98 - 98.8 % Hydrolyzed

Isocyanatoethyl methacrylate = 6.2 mole %

| Sample | % PVA | % Monomer | % BME | % $H_2O$ | % Diameter Change (Initial to Boiled) |
|---|---|---|---|---|---|
| 1 | 82 | 18 Styrene | 0.08 | 78.08 | - 18.16 |
| 2 | 69 | 31 HFBMA | 0.09 | 55.38 | - 31.72 |
| 3 | 73 | 27 MPDS | 0.06 | 61.19 | - 24.87 |
| 4 | 84 | 16 BMTDS | 0.05 | 68.03 | - 27.03 |
| 5 | 100 | - | 0.06 | 80.77 | - |
| 6 | 100 | - | 0.03* | 76.20 | - 19.4 |

*1-hydroxycyclohexylphenyl ketone
HFBMA = hexafluorobutyl methacrylate
MPDS = 3-methacryloxypropylpentamethyldisiloxane
BMTDS = bis(methacryloxypropyl)tetramethyldisiloxane

All films are strong, clear and colorless. Except for styrene (Sample 1), the monomers used decrease the final film water content and increase the % diameter change on going from the mold to the final equilibrated state compared to the controls.

Example 15: This example is a listing of PVA films made in a similar manner to that in example 1, containing a mixture of various hydrophobic and hydrophilic comonomers. These mixtures are chosen so that the final content is in the range 50 - 60 %.

Table of Example 15

PVA = Air Products Vinol® 107

22 - 31,000 MW/98 - 98.8 % Hydrolyzed

Isocyanatoethyl methacrylate = 10.4 mole %

| Sample | % PVA | % Monomer Hydro-philic | Hydro-phobic | % (Ini-tia-tor (BME) | % $H_2O$ | % Diameter Change (Initial to Boiled) |
|---|---|---|---|---|---|---|
| 1 | 74.2 | 5.4 NVP | 20.4 IBMA | 0.08 | 50.16 | - 31.8 |
| 2 | 71.7 | 5.6 AA | 22.7 IBMA | 0.07 | 48.80 | - 31.3 |
| 3 | 70.2 | 4.8 AA | 25.0 MMA | 0.04 | 56.84 | - 28.4 |
| 4 | 69.9 | 4.6 NVP | 25.5 MMA | 0.03 | 57.34 | - 29.2 |
| 5 | 77.1 | 4.3 NVP | 18.6 MMA | 0.04 | 58.30 | - 27.8 |
| 6 | 74.2 | 4.6 HEMA | 21.1 MMA | 0.04 | 56.74 | - 28.2 |

NVP = N-vinyl pyrrolidone, AA = acrylamide, HEMA = 2-hydroxyethyl methacrylate, IBMA = isobornyl methacrylate, MMA = methyl methacrylate, BME = benzoin methyl ether

All of the above films are clear, colorless and strong.

Example 16: This example illustrates the effect of high isocyanatoethyl methacrylate (IEM) content and added comonomer on various physical properties of films. PVA solutions are made according to example 1 with PVA solution concentrations as listed in the following table. IEM is added dropwise under nitrogen and % IEM content by weight can be determined from the table. Sheets are polymerized with monomer (samples 4, 12, 13, 16, 19 and 22 do not have monomer) as in example 1 with benzoin methyl ether (initiator) as indicated in the table below. Both 90 and 95 mole % IEM-PVA solutions contain unreacted isocyanate as indicated by I.R. spectroscopy.

Table of Example 16

| Sample | Wt. % PVA in DMSO | Mole % IEM | Wt. % PVA + IEM in DMSO | % PVA | % Monomer | % BME | % $H_2O$ Content | % Diameter Change (Initial to Boiled) | Observation (0.3 mm thick sheets) |
|---|---|---|---|---|---|---|---|---|---|
| 1 | 10.0 | 30 | 18.6 | 67 | 33 DMA | 0.04 | 54.94 | - 16.02 | clear, cracked on bending* |
| 2 | ↓ | ↓ | ↓ | 67 | 33 NVP | 0.04 | 52.55 | - 13.12 | clear, cracked on bending* |
| 3 | ↓ | ↓ | ↓ | 68 | 32 AA | 0.04 | 53.43 | - 15.92 | clear, cracked on bending two times* |
| 4 | ↓ | ↓ | ↓ | 100 | - | 0.04 | 43.07 | | clear, did not crack on bending |
| 5 | 10.0 | 50 | 23.5 | 76 | 24 DMA | 0.05 | 45.92 | - 19.47 | clear, cracked on bending* |
| 6 | ↓ | ↓ | ↓ | 66 | 34 DMA | 0.04 | 50.07 | - 15.92 | ↓ |
| 7 | ↓ | ↓ | ↓ | 76 | 24 NVP | 0.04 | 48.55 | - 14.90 | ↓ |
| 8 | ↓ | ↓ | ↓ | 76 | 24 AA | 0.04 | 46.59 | - 16.57 | ↓ |
| 9 | ↓ | ↓ | 21.9 | 39 | 61 AA | 0.06 | 56.93 | - 10.66 | ↓ |
| 10 | ↓ | ↓ | 23.5 | 76.7 | 23.2 HEMA | 0.07 | 37.36 | - 26.0 | clear, bent twice without cracking* |
| 11 | ↓ | ↓ | ↓ | 79.9 | 20.1 MMA | 0.05 | 34.01 | - 27.7 | clear, bent twice without cracking* |
| 12 | ↓ | ↓ | ↓ | 100.0 | - | 0.08 | 37.06 | - 27.4 | clear, cracked on bending* |
| 13 | ↓ | ↓ | 21.9 | 100.0 | - | 0.04 | 38.07 | | clear, did not crack on bending |
| 14 | 7.5 | 75 | 22.8 | 79.1 | 20.9 MMA | 0.05 | 33.38 | - 28.5 | clear, cracked on bending* |
| 15 | ↓ | ↓ | ↓ | 77.5 | 22.5 HEMA | 0.05 | 34.73 | - 28.4 | ↓ |
| 16 | ↓ | ↓ | ↓ | 100.0 | - | 0.05 | 33.67 | - 29.0 | ↓ |
| 17 | 6.8 | 90 | 23.4 | 74.5 | 25.5 MMA | 0.07 | 40.05 | - 23.8 | clear, cracked on bending** |
| 18 | ↓ | ↓ | ↓ | 74.4 | 25.6 HEMA | 0.05 | 36.87 | - 26.2 | ↓ |
| 19 | ↓ | ↓ | ↓ | 100.0 | - | 0.05 | 43.57 | - 24.3 | ↓ |
| 20 | 2.9 | 95 | 11.3 | 73.8 | 26.2 MMA | 0.07 | 59.84 | - 27.4 | hazy, cracked on bending** |
| 21 | ↓ | ↓ | ↓ | 70.1 | 29.9 HEMA | 0.06 | 46.68 | - 31.7 | ↓ |
| 22 | ↓ | ↓ | ↓ | 100.0 | - | 0.08 | 63.55 | - 28.0 | ↓ |

Comments to table of example 16:

PVA used here is Vinol®107

*This composition when made into a thin (0.07 mm thick) sheet can be bent without cracking

**This composition when made into a very thin (0.02 mm thick) sheet can be bent without cracking

DMA = dimethylacrylamide, NVP = N-vinyl pyrrolidone, AA = acrylamide,

HEMA = 2-hydroxyethyl methacrylate, MMA = methyl methacrylate

As shown above, clear, flexible films can be made using up to 95 mole % IEM. Water content is also sensitive to the solid content in the reaction mixture. It should be noted that the water content for the HEMA containing film (at 90 or 95 % IEM) is unexpectedly low. This can be due to additional crosslinking agent formed in situ by the reaction of HEMA and the remaining unreacted IEM.

Example 17: Preparation of reaction product of 2,4 toluene diisocyanate with 2-hydroxyethyl methacrylate: (3-isocyanato-p-tolyl) carbamoyloxyethyl methacrylate (TDI-HEMA)

5.81 g (0.033 moles) 2,4 toluene diisocyanate (TDI) is dissolved in 5.04 g isopropyl acetate at room temperature and to this is added 2.18 g (0.017 moles) 2-hydroxyethyl methacrylate (HEMA) and the mixture stirred 16 hours at room temperature. A white precipitate appears during the reaction. The mixture is cooled to 5° and left standing for 16 hours. The precipitate is filtered, washed with cold toluene and hexane and dried yielding 2 g of crystalline product having a melting point of 69° - 70°C (U.S. Patent 4,008,247, m. p. 71 - 72°C). An IR-spectrum of the compound in DMSO shows a large isocyanate peak at 2270 $cm^{-1}$. NMR results suggest that 91 mole % (95 wt. %) of the product is the monoadduct of 2-hydroxyethyl methacrylate and 2,4 toluene diisocyanate (para to the methyl group).

Example 18: 0.41 g of reaction product of example 17 is dissolved in 1 ml of dimethyl sulfoxide (Aldrich, Gold Label) and this solution added dropwise over a period of 1 minute to 15 ml of a rapidly stirring 10 % Air Products Vinol® 107/DMSO solution. The mixture is allowed to react at room temperature for 1 hour (complete disappearance of isocyanate IR band at 2270 $cm^{-1}$) and is designated as the stock solution. In sample 1, benzoin methyl ether (BME), 0,008 g, is dissolved in 2.6 g of the stock solution and the mixture poured into sandwich molds and irradiated (360 nm) for 1 hour. In sample 2, to 3.03 g of the stock solution is added 0.0745 g methyl methacrylate (MMA) and 0.0033 g BME and the mixture is then treated as in sample 1. Sample 3 is prepared in a similar manner to sample 2 (see table below). After polymerizsation samples of the films are measured, equilibrated in water, boiled for 10 minutes and then remeasured.

Table of Example 18

| Sample | Wt. % TDI-HEMA* Reaction Product | Mole % TDI-HEMA* to Alcohol Units | Wt. % PVA | Wt. % MMA | Wt. % DMSO | Wt. % BME | % $H_2O$ Content | % Diameter Change (Initial to Boiled) | Observation After Irradiation, Water Equilibration & Boiling |
|---|---|---|---|---|---|---|---|---|---|
| 1 | 2.5 | 3.7 | 9.1 | 0 | 88.1 | 0.3 | - | - | Yellow solution, film not formed |
| 2 | 3.9 | 5.9 | 9.1 | 0 | 86.6 | 0.4 | - | - | Soft, tacky pale yellow gel |
| 3 | 7.3 | 12.3 | 8.2 | 0 | 84.3 | 0.3 | 68.41 | - | Film: transparent, pale yellow, moderate strength, flexible, elastic |
| 4 | 7.66 | 12.3 | 8.98 | 2.4 | 80.85 | 0.11 | 61.82 | - 26.65 | Film: transparent, pale yellow, strong, flexible, elastic |
| 5 | 7.82 | 12.3 | 8.72 | 4.92 | 78.45 | 0.09 | 54.36 | - 28.60 | Film: transparent, pale yellow, strong, flexible, elastic |
| 6 | 7.6 | - | - | - | 91.5 | 0.5 | - | - | Yellow solution, film not formed |

* (3-isocyanato-p-tolyl)carbamoyloxyethyl methacrylate

As shown above in sample 3, TDI-HEMA crosslinks PVA into a flexible strong, pale yellow film when reacted at a level of approximately 12 mole percent with respect to vinyl alcohol units.

As shown above in samples 4 and 5, increasing the level of MMA lowers the water content, increases the % diameter change and increases the strength of the water equilibrated film.

Example 19: Preparation of reaction product of 2,4 toluene diisocyanate with t-butyl-aminoethyl methacrylate: [(3-isocyanato-p-tolyl)t-butylureido]ethyl methacrylate (TDI-tBAEM).

2.08 g (0.012 moles) 2,4 toluene diisocyanate (TDI) is dissolved in 5.04 g isopropyl acetate at room temperature. The solution is cooled in dry ice and 2.37 g (0.013 moles) t-butylaminoethyl methacrylate (tBAEM) is added dropwise in the cold mixture. The mixture is left 1.5 hr. in dry ice and slowly warmed to room temperature. A white precipitate is formed during this process. The mixture is cooled to -15 °C at which point the precipitate is filtered, washed with cold hexane and dried yielding 2.37 g of crystalline product having a melting point of 98 - 99 °C. An I.R. of the compound in chlorobenzene shows a large isocyanate peak at 2270 $cm^{-1}$. NMR results suggest that 90 mol %*(~ 90 wt. %) of the product is the monoadduct of 2,4 toluene diisocyanate and t-butylaminoethyl methacrylate (para to the methyl group).

Example 20: In sample 1, 0.59 g of the reaction product of example 19 is suspended in 2 ml of dimethyl sulfoxide (Aldrich, Gold Label) and this solution injected into 5 ml of rapidly stirring 10 % Air Products Vinol® 107/DMSO solution under nitrogen. The mixture is allowed to react at room temperature for 2 hours during which time the suspension turns to a clear solution. Benzoin methyl ether (BME), 0.008 g, is dissolved in 3.08 g of this solution and the mixture poured into sandwich molds and irradiated (360 nm) for 1 hour.

Sample 2 is prepared in a similar manner to sample 1 except 0.59 g of the reaction product of example 19 is suspended in 2.5 g of dimethyl sulfoxide. After obtaining a clear solution with PVA, 3.0505 g of this stock solution is combined with 0.0755 g of methyl methacrylate and 0.0022 g of BME. Sample 3 is prepared in a similar manner to sample 2 (see table below). After polymerization, samples of the films are measured, equilibrated in water, boiled for 10 minutes and then remeasured.

*Note: The other 10 mole % consists of a combination of monoadduct at the other site and diadduct.

Table of Example 20

| Sample | Wt. % TDI-tBAEM* Reaction Product | Mole % TDI-tBAEM* to Alcohol Units | Wt. % PVA | Wt. % MMA | Wt. % DMSO | Wt. % BME | % $H_2O$ Content | % Diameter Change (Initial to Boiled) | Observation After Irradiation, Water Equilibration & Boiling |
|---|---|---|---|---|---|---|---|---|---|
| 1 | 6.48 | 13.0 | 7.77 | 0 | 85.49 | 0.26 | 50.92 | - | Film: transparent, pale yellow, fairly strong, flexible |
| 2 | 7.11 | 13.0 | 6.03 | 2.41 | 84.38 | 0.07 | 31.70 | - 39.08 | Film: transparent, pale yellow, strong, flexible |
| 3 | 6.92 | 13.0 | 5.86 | 5.10 | 82.05 | 0.07 | 29.20 | - 37.45 | Film: transparent, pale yellow, strong, flexible |
| 4 | 12.68 | - | - | - | 86.65 | 0.67 | - | - | Pale yellow solution Film not formed |

*[(3-isocyanato-p-tolyl)t-butylureido]ethyl methacrylate

As shown above, TDI-tBAEM crosslinks PVA into a transparent, yellow film, which becomes strong after equilibration in water.

As shown above in samples 2 and 3, increasing the level of MMA lowers the water content and increases the strength of the water equilibrated film. No film is formed in the absence of PVA, see sample 4.

Example 21: Preparation of reaction product of isophorone diisocyanate (IPDI) with 2-hydroxyethyl methacrylate: An isocyanatoisophoronylcarbamoyloxyethyl methacrylate (IPDI-HEMA).

A: 5.83 g (0.045 mole) 2-hydroxyethyl methacrylate (HEMA) is combined with 5.04 g (0.0227 mole) IPDI and stirred at room temperature for 65 hours. An isocyanate titration at this point shows 39 % unreacted. The proton NMR date of the reaction mixture is consistent with the monoadduct formation approximately equally distributed at both isocyanates. Attack at the second site, i.e. diadduct formation, appears to be a slower process.

B: 5.81 g (0.045 mole) HEMA is combined with 5.01 g (0.0226 mole) IPDI and stirred at room temperature for 161 hours. An isocyanate titration at this point shows 43 % unreacted.

Example 22: For sample 1, 0.65 g of the isocyanatoisophoronylcarbamoyloxyethyl methacrylate (IPDI-HEMA) of example 21(A) is slowly added to 5 g of a rapidly stirring 10 % Vinol® 107/DMSO solution at room temperature and allowed to react for 1 hour (complete disappearance of isocyanate IR band at 2270 $cm^{-1}$). To this solution is dissolved 0.026 g benzoin methyl ether (BME) and the solution poured into a sandwich mold and irradiated (360 nm) for 45 minutes at room temperature. For sample 2, 1.1996 g of the IPDI-HEMA of example 21(B) is slowly added to 10 g of a rapidly stirring 10 % Vinol® 107/DMSO solution at room temperature and allowed to react for 1 hour. To 3.0268 g of this solution is added 0.07 g methyl methacrylate (MMA) and 0.004 g BME and the solution poured into a sandwich mold and irradiated for 1 hour at room temperature. Sample 3 is prepared in a similar manner to sample 2 (see table below). After polymerization samples of the films are measured, equilibrated in water, boiled for 10 minutes and then remeasured.

| Sample | Wt. % IPDI-HEMA Product | Mole % + IPDI-HEMA Monoadduct to Alcohol Units | Wt. % PVA | Wt. % MMA | Wt. % DMSO | Wt. % BME | % $H_2O$ Content | % Diameter Change (Initial to Boiled) | Observation After Irradiation, Water Equilibration & Boiling |
|---|---|---|---|---|---|---|---|---|---|
| 1 | 11.45 | 10.0 | 8.80 | 0 | 79.30 | 0.45 | 42.76 | - | Film: transparent, colorless. strong, flexible |
| 2 | 10.46 | 8.69 | 8.72 | 2.26 | 78.44 | 0.13 | 44.41 | - 29.52 | Film: transparent, colorless, strong, flexible |
| 3 | 10.12 | 8.69 | 8.44 | 5.38 | 75.95 | 0.12 | 39.27 | - 29.62 | Film: transparent, colorless, strong, flexible |
| 4 | 11.60 | - | - | - | 87.8 | 0.6 | - | - | No film, remains a liquid |

+ Assuming 60 % of isocyanate groups reacted and diadduct formation slow i.e.50 % reaction corresponds to 100 % monoadduct. One then has 40 mole %* HEMA, 40 mole %* monoadduct and 10 mole %* diadduct. Hence, the monoadduct is calculated to be present as 58 wt % of the reaction product i.e. 0.58 x 11.45 = 6.64 wt % and then, 100X (mole monoadduct/mole vinyl alcohol units) = $\left(\frac{6.64/8.8}{352/44}\right)$ X 100 = 10 mole % for sample 1. The values for samples 2 and 3 are calculated in a similar manner.

* Based on on original moles of HEMA.

As shown in sample 1 of the above table the isocyanatoisophoronyl carbamoyloxyethyl methacrylate reacts with PVA, and the derivatized PVA is crosslinked by U.V. light into a gel. This gel forms a clear, colorless, flexible, strong film on equilibration with water.

As shown in samples 2 and 3, increasing the level of MMA lowers the water content.

Example 23: 3 g of PVA Vinol® 107 is dissolved in 27 g of DMSO at 60 °C under nitrogen. After the solution is cooled to room temperature 500 μl allyl isocyanate (Aldrich, 98 %) (13.5 mole % isocyanate with respect to vinyl alcohol units) is slowly added and allowed to react for 3 days at room temperature (complete disappearance of isocyanate IR band at $2270^{-1}$). Methyl methacrylate and initiator are dissolved in this solution in proportions indicated in the table below. The solutions are poured into sandwich molds and U.V. irradiated for 1 hour at room temperature. As a comparison sample, allyl isocyanate (undiluted) with added initiator is irradiated for 5 hours at room temperature.

| Sample | Allyl Wt. % | Isocyanate Mole % | PVA Wt. % | MMA Wt. % | Initiator Wt. % | DMSO Wt. % | Observation |
|---|---|---|---|---|---|---|---|
| 1 | 1.6 | 13.5 | 9.83 | - | 0.03* | 88.54 | Liquid, no film or gel |
| 2 | 1.6 | 13.5 | 9.73 | 1.06 | 0.03* | 87.58 | ↓ |
| 3 | 3.8 | 21.0 | 9.58 | - | 0.4** | 86.23 | ↓ |
| 4 | 98.9 | - | - | - | 1.1* | 0 | ↓ |

* 1-hydroxycyclohexylphenyl ketone

** benzoin methylether

As shown above (samples 1 to 3), the allyl derivatized PVA is not U.V. crosslinked into a gel. Also allyl isocyanate itself (neat) is not polymerized into a gel (sample 4).

Example 24: This example illustrates the effect of low isocyanatoethyl methacrylate (IEM) content and added comonomer, methyl methacrylate (MMA), on various physical properties of films. PVA solutions are made according to example 1. IEM is added dropwise under nitrogen and % IEM content by weight can be determined from the table. Sheets are polymerized with MMA (samples 1, 5 and 9 do not have MMA) as in example 1 with benzoin methyl ether (initiator) as indicated in the table below. In some cases extra DMSO is added to help dissolve the MMA.

PVA-IEM Hydrogel: Low IEM Content Using VINOL® 107

| Sample | Mole % IEM | Wt. % PVA + IEM in DMSO | % PVA | % MMA | % BME | % $H_2O$ Content | % Diameter Change (Initial to Boiled) | Observation: After Irradiation | Observation: After Swelling in Water and Boiling |
|---|---|---|---|---|---|---|---|---|---|
| 1 | 1.0 → | 10.30 → | 100 | 0 | 0.05 | - | - | viscous solution | - |
| 2 | | | 74.5 | 25.4 | 0.04 | - | - | clear, soft, gel | - |
| 3 | | | 49.5 | 50.5 | 0.08 | - | - | clear, soft, gel | - |
| 4 | | 8.72 | 25.0 | 75.0 | 0.04 | - | - | viscous solution | - |
| 5 | 1.5 → | 10.47 → | 100 | 0 | 0.05 | - | - | clear, soft, tacky film | - |
| 6 | | | 65 | 35.0 | 0.05 | 75.78 | - 21.0 | - | clear, flexible film |
| 7 | | | 49.7 | 50.3 | 0.05 | 72.87 | - 22.7 | - | clear, flexible film |
| 8 | | 8.94 | 24.9 | 75.1 | 0.06 | - | - | clear, soft film | opaque, flexible film |
| 9 | 2.0 → | 10.63 → | 100 | 0 | 0.05 | - | + 12.0 | - | clear, very weak film |
| 10 | | | 39.3 | 60.7 | 0.06 | 60.86 | - 27.4 | - | clear, flexible film |
| 11 | | | 24.9 | 75.1 | 0.14 | - | - 27.7 | clear, in film | opaque, flexible film |
| 12 | 2.1 → | 10.65 → | 78.8 | 21.2 | 0.09 | 82.66 | - 13.0 | - | clear, weak film |
| 13 | | | 65.6 | 34.4 | 0.06 | 74.64 | - 17.4 | - | clear, flexible film |

As shown above a clear soft gel can be made using as little as 1 mole % IEM with MMA as additional comonomer. At 2.0 mole % IEM film clarity is maintained with up to 61 to 75 % MMA:

Example 25: This example shows the synthesis of a film with added crosslinking agent, i.e., ethyleneglycol dimethacrylate (EGDMA). The film is made as in example 1

| Mole % IEM | Wt. % PVA | Wt. % EGDMA | Wt. % BME | % $H_2O$ Content | % Diameter Change (Initial to Boiled) | Observation |
|---|---|---|---|---|---|---|
| 6.2 | 98.4 | 1.6 | 0.04 | 82.62 | - 15.4 | clear, very flexible film |

As shown above additional crosslinking agent may be incorporated in the system with no adverse effect on clarity or flexibility.

## Claims

**Claims for the following Contracting States : BE, CH, DE, FR, GB, IT, LI, LU, NL, SE**

1. A polymer which is a derivative of a polyvinyl alcohol, having a weight average molecular weight of at least 2,000, and containing from 0.5 to 90 percent, based on the number of hydroxyl groups in said polyvinyl alcohol, of units of the formula

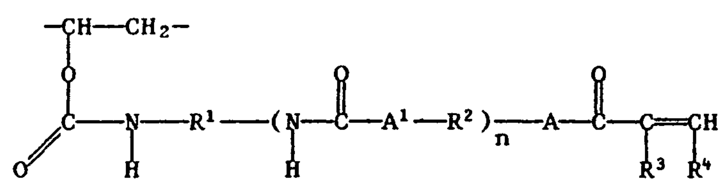

(I)

wherein $R^1$ and $R^2$ are independently alkylene, arylene, a divalent cycloaliphatic group, arylenealkylene, alkylenearylene or arylenealkylenearylene, n is 0 or 1, $A^1$ is oxygen or NR', A is oxygen, NR'' or a bivalent ureido group, $R^3$ is hydrogen or methyl, $R^4$ is hydrogen, methyl or $COOR^5$, where $R^5$ is hydrogen or lower alkyl, with the proviso that if $R^3$ is methyl, $R^4$ is hydrogen, R' and R'' are independently hydrogen or lower alkyl, this polymer being an addition reaction product of units of formula I with from 0 to 80 units of a vinylic monomer per unit of formula I; with the proviso that there are only up to 20 percent of units of formula I in case that no units of a vinylic monomer are used; and wherein the term "lower" defines groups having up to 7 carbon atoms.

2. A polymer according to claim 1 wherein in formula I $R^1$ and $R^2$ are independently alkylene of 2 to 8 carbon atoms, arylene of 6 to 12 carbon atoms, a saturated cycloaliphatic divalent group of 6 to 10 carbon atoms, arylenealkylene or alkylenearylene of 7 to 14 carbon atoms, or arylenealkylenearylene of 13 to 16 carbon atoms; A is oxygen, NR'' or NHCONR'', where R'' is hydrogen or lower alkyl; and the other variables are as defined in claim 1.

3. A polymer according to claim 2 wherein in formula I $R^1$ and $R^2$ are independently alkylene of 2 to 6 carbon atoms, phenylene, unsubstituted or substituted by lower alkyl, cyclohexylene, cyclohexylene lower alkylene, unsubstituted or substituted by lower alkyl, phenylene lower alkylene, lower alkylene phenylene or phenylene lower alkylene phenylene and n, $A^1$, A, $R^3$ and $R^4$ are as defined in claim 2.

4. A polymer according to claim 2 wherein in formula I A is oxygen, $R^3$ is methyl, $R^4$ is hydrogen, n is zero and $R^1$ is alkylene of 2 to 6 carbon atoms.

5. A polymer according to claim 2 wherein in formula I A is oxygen, $R^3$ is methyl, $R^4$ is hydrogen, n is one, $R^1$ is lower alkyl phenylene or lower alkyl cyclohexylene lower alkylene, $R^2$ is lower alkylene, and $A^1$ is oxygen or N-lower alkyl.

6. A polymer according to claim 1 wherein said polyvinyl alcohol has a weight average molecular weight of at least 10,000.

7. A polymer according to claim 1 wherein said polyvinyl alcohol has a weight average molecular weight of up to 100,000.

8. A polymer according to claim 1 wherein no units of a vinylic monomer are used.

9. A polymer according to claim 8 containing from 0.5 to 20 percent of units of the formula I.

10. A polymer according to claim 9 wherein said polyvinyl alcohol has a weight average molecular weight of between 10,000 and 100,000.

11. A polymer according to claim 8 wherein n is zero.

12. A polymer according to claim 8 wherein n is 1 and $A^1$ is oxygen.

13. A polymer according to claim 8 wherein n is 0, $R^1$ is alkylene of 2 to 6 carbon atoms, A is oxygen, $R^3$ is methyl and $R^4$ is hydrogen.

14. A polymer according to claim 13 wherein $R^1$ is ethylene.

15. A polymer according to claim 1 wherein between 0.01 and 80 units of vinylic monomer are reacted per unit of formula I.

16. A polymer according to claim 15 wherein the polymer contains from at least 1 percent to 90 percent of units of formula I, based on the number of hydroxyl groups on the polyvinyl alcohol.

17. A polymer according to claim 16, wherein the polyvinyl alcohol contains at least 1 up to 20 percent units of formula I based upon the number of hydroxyl groups on said polyvinyl alcohol, which units of formula I are reacted with 0.5 to 30 units of either a hydrophobic vinylic monomer or a mixture of hydrophobic and hydrophilic vinylic monomers containing at least 50 percent by weight of hydrophobic monomer based upon the total weight of said vinylic monomers, based upon the units of formula I.

18. A polymer according to claim 16, wherein the polyvinyl alcohol contains from 20 up to 50 percent units of formula I based on the number of hydroxyl groups on said polyvinyl alcohol, which units of formula I are reacted with 0.01 to 10 units of vinylic monomer, wherein up to 80 weight percent of the total vinylic monomer is hydrophilic, per unit of formula I in the polymer.

19. A polymer according to claim 16, wherein the polyvinyl alcohol contains from 50 to 90 percent units of formula I based on the number of hydroxyl groups on said polyvinyl alcohol, which units of formula I are reacted with 0.01 to 10 units of either a hydrophilic vinylic monomer or, a mixture of hydrophilic and hydrophobic vinylic monomers containing at least 50 percent by weight of hydrophilic monomer based upon the total weight of said vinylic monomers, based upon the units of formula I.

20. A polymer according to any one of claims 17 to 19 wherein n is zero and A is oxygen.

21. A polymer according to any one of claims 17 to 19 wherein n is 0, $R^1$ is alkylene of 2 to 6 carbon atoms, A is oxygen, $R^3$ is methyl and $R^4$ is hydrogen.

22. A polymer according to claim 21 wherein $R^1$ is ethylene.

23. A polymer according to any one of claims 17 to 19 wherein a hydrophobic monomer is selected from $C_{1-18}$-alkyl acrylates and methacrylates, $C_{3-18}$-alkyl acrylamides and methacrylamides, acrylonitrile, methacrylonitrile, vinyl $C_{1-18}$-alkanoates, $C_{2-18}$-alkenes, $C_{2-18}$-haloalkenes, styrene, $C_{1-6}$-alkyl styrenes, vinyl alkyl ethers wherein the alkyl portion has 1 to 6 carbon atoms, $C_{3-12}$-perfluoroalkyl ethyl thiocarbonylaminoethyl acrylates and methacrylates, $C_{3-12}$-fluoroalkyl acrylates and methacrylates, acryloxy and methacryloxy alkyl siloxanes, N-vinyl carbazole, $C_{1-12}$-alkyl esters of maleic, fumaric, itaconic, and mesaconic acids.

24. A polymer according to claim 23 wherein a hydrophobic monomer is selected from methyl acrylate, ethyl acrylate, propyl acrylate, isopropyl acrylate, cyclohexyl acrylate, 2-ethylhexyl acrylate, methyl methacrylate, ethyl methacrylate, propyl methacrylate, vinyl acetate, vinyl propionate, vinyl butyrate, vinyl valerate, styrene, chloroprene, vinyl chloride, vinylidene chloride, acrylonitrile, 1-butene, butadiene, methacrylonitrile, vinyl toluene, vinyl ethyl ether, perfluorohexylethylthiocarbonylaminoethyl methacrylate, isobornyl methacrylate, hexafluorobutylmethacrylate, 3-methacryloxypropylpentamethyldisiloxane, and bis(methacryloxypropyl)tetramethyldisiloxane.

**25.** A polymer according to any one of claims 17 to 19 wherein a hydrophilic monomer is selected from hydroxy substituted lower alkyl acrylates and methacrylates, acrylamide, methacrylamide, $C_{1-2}$-alkyl acrylamide and methacrylamide, ethoxylated acrylates and methacrylates, hydroxy substituted lower alkyl acrylamide and methacrylamide, hydroxy substituted lower alkyl vinyl ethers, sodium ethylene sulfonate, sodium styrene sulfonate, 2-acrylamido-2-methylpropanesulfonic acid, N-vinylpyrrole, N-vinylsuccinimide, N-vinyl pyrrolidone, 2- and 4-vinyl pyridine, acrylic acid, methacrylic acid, amino (by amino including quaternary ammonium) -monoloweralkylamino- or diloweralkylamino-lower alkyl acrylates or methacrylates, allyl alcohol.

**26.** A polymer according to claim 25 wherein a hydrophilic monomer is selected from hydroxyethyl methacrylate, hydroxyethyl acrylate, acrylamide, methacrylamide, dimethylacrylamide, allyl alcohol, vinyl pyridine, vinyl pyrrolidone, glycerol methacrylate, N-(1,1-dimethyl-3-oxobutyl) acrylamide.

**27.** A polymer according to claim 17 wherein the hydrophobic vinylic monomer is selected from methyl methacrylate and vinyl acetate and the hydrophilic vinylic monomer is selected from 2-hydroxyethyl methacrylate, N-vinyl pyrrolidone and acrylamide.

**28.** A polymer according to claim 18 wherein the hydrophobic vinylic monomer is selected from methyl methacrylate and vinyl acetate and the hydrophilic vinylic monomer is selected from 2-hydroxyethyl methacrylate, N-vinyl pyrrolidone and acrylamide.

**29.** A polymer according to claim 19 wherein the hydrophobic vinylic monomer is selected from methyl methacrylate and vinyl acetate and the hydrophilic vinylic monomer is selected from 2-hydroxyethyl methacrylate, N-vinyl pyrrolidone and acrylamide.

**30.** A crosslinked polymeric hydrogel material, prepared by crosslinking a polymer according to claim 1.

**31.** A hydrated contact lens prepared by crosslinking a polymer according to claim 1 in the presence of an organic solvent and a free radical initiator, in a contact lens mold, and equilibrating the resultant swollen crosslinked polymeric material in an aqueous medium to recover said hydrated contact lens.

**32.** Process for the manufacture of a crosslinked polymeric hydrogel material characterized in that a polymer according to claim 1 is crosslinked in the presence of an organic solvent and a free radical initiator.

**33.** Process according to claim 32 wherein a photoinitiator and UV-light are used.

**34.** Process according to claim 33 wherein the organic solvent is selected from ethanol, methanol, dimethylformamide, acetamide, acetonitrile, dimethylacetamide, dimethylsulfoxide or mixtures thereof, or mixtures thereof with water.

**35.** Process according to claim 33 wherein the organic solvent is dimethylsulfoxide.

**36.** Process for the manufacture of a hydrated contact lens characterized in that a polymer according to claim 1 is crosslinked in the presence of an organic solvent and a free radical initiator, in a contact lens mold, and equilibrating the resultant swollen crosslinked polymeric material in an aqueous medium to recover said hydrated contact lens.

**37.** A process according to claim 36 wherein a photoinitiator and UV-light are used.

**38.** A process according to claim 36 wherein the organic solvent is selected from ethanol, methanol, dimethylformamide, acetamide, acetonitrile, dimethylacetamide, dimethylsulfoxide or mixtures thereof, or mixtures thereof with water.

**39.** A process according to claim 36 wherein the organic solvent is dimethylsulfoxide.

**40.** The use of a crosslinked polymeric hydrogel according to claim 30 for the manufacture of a contact lens.

**Claims for the following Contracting State : AT**

**1.** A process for the manufacture of a polymer which is a derivative of a polyvinyl alcohol, having a weight average molecular weight of at least 2,000, and containing from 0.5 to 90 percent, based on the number of hydroxyl groups in said polyvinyl alcohol, of units of the formula

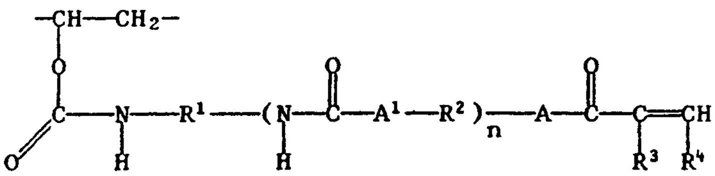

(I)

wherein $R^1$ and $R^2$ are independently alkylene, arylene, a divalent cycloaliphatic group, arylenealkylene, alkylenearylene or arylenealkylenearylene, n is 0 or 1, $A^1$ is oxygen or NR', A is oxygen, NR'' or a bivalent ureido group, $R^3$ is hydrogen or methyl, $R^4$ is hydrogen, methyl or $COOR^5$, where $R^5$ is hydrogen or lower alkyl, with the proviso that if $R^3$ is methyl, $R^4$ is hydrogen, R' and R'' are independently hydrogen or lower alkyl, this polymer being an addition reaction product of units of formula I with from 0 to 80 units of a vinylic monomer per unit of formula I; with the proviso that there are only up to 20 percent of units of formula I in case that no units of a vinylic monomer are used; and wherein the term "lower" defines groups having up to 7 carbon atoms, wherein the starting materials are conventionally reacted.

**2.** A process according to claim 1 wherein in formula I $R^1$ and $R^2$ are independently alkylene of 2 to 8 carbon atoms, arylene of 6 to 12 carbon atoms, a saturated cycloaliphatic divalent group of 6 to 10 carbon atoms, arylenealkylene or alkylenearylene of 7 to 14 carbon atoms, or arylenealkylenearylene of 13 to 16 carbon atoms; A is oxygen, NR'' or NHCONR'', where R'' is hydrogen or lower alkyl; and the other variables are as defined in claim 1.

**3.** A process according to claim 2 wherein in formula I $R^1$ and $R^2$ are independently alkylene of 2 to 6 carbon atoms, phenylene, unsubstituted or substituted by lower alkyl, cyclohexylene, cyclohexylene lower alkylene, unsubstituted or substituted by lower alkyl, phenylene lower alkylene, lower alkylene phenylene or phenylene lower alkylene phenylene and n, $A^1$, A, $R^3$ and $R^4$ are as defined in claim 2.

**4.** A process according to claim 2 wherein in formula I A is oxygen, $R^3$ is methyl, $R^4$ is hydrogen, n is zero and $R^1$ is alkylene of 2 to 6 carbon atoms.

**5.** A process according to claim 2 wherein in formula I A is oxygen, $R^3$ is methyl, $R^4$ is hydrogen, n is one, $R^1$ is lower alkyl phenylene or lower alkyl cyclohexylene lower alkylene, $R^2$ is lower alkylene, and $A^1$ is oxygen or N-lower alkyl.

**6.** A process according to claim 1 wherein said polyvinyl alcohol has a weight average molecular weight of at least 10,000.

**7.** A process according to claim 1 wherein said polyvinyl alcohol has a weight average molecular weight of up to 100,000.

**8.** A process according to claim 1 wherein no units of a vinylic monomer are used.

**9.** A process according to claim 8 containing from 0.5 to 20 percent of units of the formula I.

**10.** A process according to claim 9 wherein said polyvinyl alcohol has a weight average molecular weight of between 10,000 and 100,000.

**11.** A process according to claim 8 wherein n is zero.

**12.** A process according to claim 8 wherein n is 1 and $A^1$ is oxygen.

**13.** A process according to claim 8 wherein n is 0, $R^1$ is alkylene of 2 to 6 carbon atoms, A is oxygen, $R^3$ is methyl and $R^4$ is hydrogen.

**14.** A process according to claim 13 wherein $R^1$ is ethylene.

**15.** A process according to claim 1 wherein between 0.01 and 80 units of vinylic monomer are reacted per unit of formula I.

**16.** A process according to claim 15 wherein the polymer contains from at least 1 percent to 90 percent of units of formula I, based on the number of hydroxyl groups on the polyvinyl alcohol.

**17.** A process according to claim 16, wherein the polyvinyl alcohol contains at least 1 up to 20 percent unite of formula I based upon the number of hydroxyl groups on said polyvinyl alcohol, which units of formula I are reacted with 0.5 to 30 units of either a hydrophobic vinylic monomer or a mixture of hydrophobic and hydrophilic vinylic monomers containing at least 50 percent by weight of hydrophobic monomer based upon the total weight of said vinylic monomers, based upon the units of formula I.

**18.** A process according to claim 16, wherein the polyvinyl alcohol contains from 20 up to 50 percent units of formula I based on the number of hydroxyl groups on said polyvinyl alcohol, which units of formula I are reacted with 0.01 to 10 units of vinylic monomer, wherein up to 80 weight percent of the total vinylic monomer is hydrophilic, per unit of formula I in the polymer.

**19.** A process according to claim 16, wherein the polyvinyl alcohol contains from 50 to 90 percent units of formula I based on the number of hydroxyl groups on said polyvinyl alcohol, which units of formula I are reacted with 0.01 to 10 units of either a hydrophilic vinylic monomer or, a mixture of hydrophilic and hydrophobic vinylic monomers containing at least 50 percent by weight of hydrophilic monomer based upon the total weight of said vinylic monomers, based upon the units of formula I.

**20.** A process according to any one of claims 17 to 19 wherein n is zero and A is oxygen.

**21.** A process according to any one of claims 17 to 19 wherein n is 0, $R^1$ is alkylene of 2 to 6 carbon atoms, A is oxygen, $R^3$ is methyl and $R^4$ is hydrogen.

**22.** A process according to claim 21 wherein $R^1$ is ethylene.

**23.** A process according to any one of claims 17 to 19 wherein a hydrophobic monomer is selected from $C_{1-18}$-alkyl acrylates and methacrylates, $C_{3-18}$-alkyl acrylamides and methacrylamides, acrylonitrile, methacrylonitrile, vinyl $C_{1-18}$-alkanoates, $C_{2-18}$-alkenes, $C_{2-18}$-haloalkenes, styrene, $C_{1-6}$-alkyl styrenes, vinyl alkyl ethers wherein the alkyl portion has 1 to 6 carbon atoms, $C_{3-12}$-perfluoroalkyl ethyl thiocarbonylaminoethyl acrylates and methacrylates, $C_{3-12}$-fluoroalkyl acrylates and methacrylates, acryloxy and methacryloxy alkyl siloxanes, N-vinyl carbazole, $C_{1-12}$-alkyl esters of maleic, fumaric, itaconic, and mesaconic acids.

**24.** A process according to claim 23 wherein a hydrophobic monomer is selected from methyl acrylate, ethyl acrylate, propyl acrylate, isopropyl acrylate, cyclohexyl acrylate, 2-ethylhexyl acrylate, methyl methacrylate, ethyl methacrylate, propyl methacrylate, vinyl acetate, vinyl propionate, vinyl butyrate, vinyl valerate, styrene, chloroprene, vinyl chloride, vinylidene chloride, acrylonitrile, 1-butene, butadiene, methacrylonitrile, vinyl toluene, vinyl ethyl ether, perfluorohexylethylthiocarbonylaminoethyl methacrylate, isobornyl methacrylate, hexafluorobutylmethacrylate, 3-methacryloxypropylpentamethyldisiloxane, and bis(methacryloxypropyl)tetramethyldisiloxane.

**25.** A process according to any one of claims 17 to 19 wherein a hydrophilic monomer is selected from hydroxy substituted lower alkyl acrylates and methacrylates, acrylamide, methacrylamide, $C_{1-2}$-alkyl acrylamide and methacrylamide, ethoxylated acrylates and methacrylates, hydroxy substituted lower

alkyl acrylamide and methacrylamide, hydroxy substituted lower alkyl vinyl ethers, sodium ethylene sulfonate, sodium styrene sulfonate, 2-acrylamido-2-methylpropanesulfonic acid, N-vinylpyrrole, N-vinylsuccinimide, N-vinyl pyrrolidone, 2- and 4-vinyl pyridine, acrylic acid, methacrylic acid, amino (by amino including quaternary ammonium) -monoloweralkylamino- or diloweralkylamino-lower alkyl acrylates or methacrylates, allyl alcohol.

**26.** A process according to claim 25 wherein a hydrophilic monomer is selected from hydroxyethyl methacrylate, hydroxyethyl acrylate, acrylamide, methacrylamide, dimethylacrylamide, allyl alcohol, vinyl pyridine, vinyl pyrrolidone, glycerol methacrylate, N-(1,1-dimethyl-3-oxobutyl)acrylamide.

**27.** A process according to claim 17 wherein the hydrophobic vinylic monomer is selected from methyl methacrylate and vinyl acetate and the hydrophilic vinylic monomer is selected from 2-hydroxyethyl methacrylate, N-vinyl pyrrolidone and acrylamide.

**28.** A process according to claim 18 wherein the hydrophobic vinylic monomer is selected from methyl methacrylate and vinyl acetate and the hydrophilic vinylic monomer is selected from 2-hydroxyethyl methacrylate, N-vinyl pyrrolidone and acrylamide.

**29.** A process according to claim 19 wherein the hydrophobic vinylic monomer is selected from methyl methacrylate and vinyl acetate and the hydrophilic vinylic monomer is selected from 2-hydroxyethyl methacrylate, N-vinyl pyrrolidone and acrylamide.

**30.** Process for the manufacture of a crosslinked polymeric hydrogel material characterized in that a polymer manufactured according to claim 1 is crosslinked in the presence of an organic solvent and a free radical initiator.

**31.** Process according to claim 30 wherein a photoinitiator and UV-light are used.

**32.** Process according to claim 31 wherein the organic solvent is selected from ethanol, methanol, dimethylformamide, acetamide, acetonitrile, dimethylacetamide, dimethylsulfoxide or mixtures thereof, or mixtures thereof with water.

**33.** Process according to claim 31 wherein the organic solvent is dimethylsulfoxide.

**34.** Process for the manufacture of a hydrated contact lens characterized in that a polymer according to claim 1 is crosslinked in the presence of an organic solvent and a free radical initiator, in a contact lens mold, and equilibrating the resultant swollen crosslinked polymeric material in an aqueous medium to recover said hydrated contact lens.

**35.** A process according to claim 34 wherein a photoinitiator and UV-light are used.

**36.** A process according to claim 34 wherein the organic solvent is selected from ethanol, methanol, dimethylformamide, acetamide, acetonitrile, dimethylacetamide, dimethylsulfoxide or mixtures thereof, or mixtures thereof with water.

**37.** A process according to claim 34 wherein the organic solvent is dimethylsulfoxide.

**38.** The use of a crosslinked polymeric hydrogel according to claim 30 for the manufacture of a contact lens.

## Patentansprüche

## Patentansprüche für folgenden Vertragsstaaten : BE, CH, DE, FR, GB, IT, LI, LU, NL, SE

**1.** Polymeres, das ein Derivat eines Polyvinylalkohols ist, der ein gewichtsgemitteltes Molekulargewicht von wenigstens 2000 hat und 0,5 bis 90 Prozent, bezogen auf die Anzahl der Hydroxylgruppen im genannten Polyvinylalkohol, an Einheiten der Formel

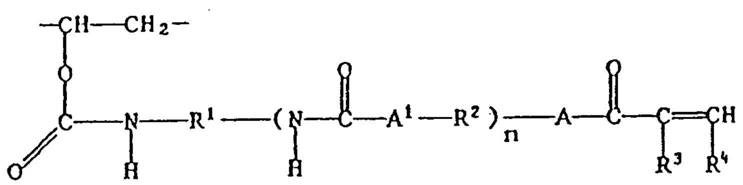

(I)

enthält, worin $R^1$ und $R^2$ unabhängig voneinander Alkylen, Arylen, eine zweiwertige cycloaliphatische Gruppe, Arylenalkylen, Alkylenarylen oder Arylenalkylenarylen ist, n ist 0 oder 1, $A^1$ ist Sauerstoff oder NR', A ist Sauerstoff, NR" oder eine zweiwertige Ureidogruppe, $R^3$ ist Wasserstoff oder Methyl, $R^4$ ist Wasserstoff, Methyl oder $COOR^5$, worin $R^5$ Wasserstoff oder Niederalkyl darstellt, mit der Maßgabe, daß, wenn $R^3$ Methyl ist, $R^4$ Wasserstoff ist, R' und R" sind unabhängig voneinander Wasserstoff oder Niederalkyl, wobei das Polymere ein Additionsreaktionsprodukt von Einheiten der Formel I ist mit 0 bis 80 Einheiten eines vinylischen Monomeren pro Einheit der Formel I; mit der Maßgabe, daß nur bis zu 20 Prozent Einheiten der Formel I vorhanden sind für den Fall, wo keine Einheiten eines vinylischen Monomeren eingesetzt werden; und worin der Begriff "Nieder" Gruppen definiert, die bis zu 7 Kohlenstoffatome aufweisen.

**2.** Polymeres nach Anspruch 1, worin in der Formel I $R^1$ und $R^2$ unabhängig voneinander darstellen Alkylen mit 2 bis 8 Kohlenstoffatomen, Arylen mit 6 bis 12 Kohlenstoffatomen, eine gesättigte cycloaliphatische zweiwertige Gruppe mit 6 bis 10 Kohlenstoffatomen, Arylenalkylen oder Alkylenarylen mit 7 bis 14 Kohlenstoffatomen oder Arylenalkylenarylen mit 13 bis 16 Kohlenstoffatomen; A ist Sauerstoff, NR" oder NHCONR", worin R" Wasserstoff oder Niederalkyl darstellt; und die anderen Variablen wie in Anspruch 1 definiert sind.

**3.** Polymeres nach Anspruch 2, worin in der Formel I $R^1$ und $R^2$ unabhängig voneinander darstellen Alkylen mit 2 bis 6 Kohlenstoffatomen, Phenylen, unsubstituiert oder substituiert durch Niederalkyl, Cyclohexylen, Cyclohexylen-niederalkylen, unsubstituiert oder substituiert durch Niederalkyl, Phenylen-niederalkylen, Niederalkylenphenylen oder Phenylen-niederalkylenphenylen, und n, $A^1$, A, $R^3$ und $R^4$ sind wie in Anspruch 2 definiert.

**4.** Polymeres nach Anspruch 2, worin in der Formel I A Sauerstoff darstellt, $R^3$ ist Methyl, $R^4$ ist Wasserstoff, n ist Null und $R^1$ ist Alkylen mit 2 bis 6 Kohlenstoffatomen.

**5.** Polymeres nach Anspruch 2, worin in der Formel I A Sauerstoff darstellt, $R^3$ ist Methyl $R^4$ ist Wasserstoff, n ist eins, $R^1$ ist Niederalkylphenylen oder Niederalkylcylohexylen-niederalkylen, $R^2$ ist Niederalkylen und $A^1$ ist Sauerstoff oder N-Niederalkyl.

**6.** Polymeres nach Anspruch 1, worin der genannte Polyvinylalkohol ein gewichtsgemitteltes Molekulargewicht von wenigstens 10000 hat.

**7.** Polymeres nach Anspruch 1, worin der genannte Polyvinylalkohol ein gewichtsgemitteltes Molekulargewicht von bis zu 100000 hat.

**8.** Polymeres nach Anspruch 1, worin keine Einheiten eines vinylischen Monomeren eingesetzt werden.

**9.** Polymeres nach Anspruch 8, das von 0,5 bis 20 Prozent Einheiten der Formel I enthält.

**10.** Polymeres nach Anspruch 9, worin der genannte Polyvinylalkohol ein gewichtsgemitteltes Molekulargewicht zwischen 10000 und 100000 hat.

**11.** Polymeres nach Anspruch 8, worin n Null ist.

**12.** Polymeres nach Anspruch 8, worin n die Bedeutung 1 hat, und $A^1$ ist Sauerstoff.

**13.** Polymeres nach Anspruch 8, worin n die Bedeutung 0 hat, $R^1$ ist Alkylen mit 2 bis 6 Kohlenstoffatomen, A ist Sauerstoff, $R^3$ ist Methyl und $R^4$ ist Wasserstoff.

**14.** Polymeres nach Anspruch 13, worin $R^1$ Ethylen ist.

**15.** Polymeres nach Anspruch 1, worin zwischen 0,01 und 80 Einheiten des vinylischen Monomeren pro Einheit der Formel I umgesetzt werden.

**16.** Polymeres nach Anspruch 15, worin das Polymere wenigstens 1 Prozent bis 90 Prozent Einheiten der Formel I enthält, bezogen auf die Anzahl der Hydroxylgruppen auf dem Polyvinylalkohol.

**17.** Polymeres nach Anspruch 16, worin der Polyvinylalkohol wenigstens 1 bis 20 Prozent Einheiten der Formel I enthält, bezogen auf die Anzahl der Hydroxylgruppen auf dem Polyvinylalkohol, wobei die Einheiten der Formel I mit 0,5 bis 30 Einheiten von entweder einem hydrophoben vinylischen Monomeren oder einem Gemisch von hydrophoben und hydrophilen vinylischen Monomeren umgesetzt werden, die wenigstens 50 Gewichtsprozent hydrophobes Monomeres enthalten bezogen auf das Gesamtgewicht der genannten vinylischen Monomeren, bezogen auf die Einheiten der Formel I.

**18.** Polymeres nach Anspruch 16. worin der Polyvinylalkohol von 20 bis zu 50 Prozent Einheiten der Formel I enthält, bezogen auf die Anzahl der Hydroxylgruppen auf dem genannten Polyvinylalkohol, wobei die Einheiten der Formel I mit 0,01 bis 10 Einheiten des vinylischen Monomeren umgesetzt werden, worin bis zu 80 Gewichtsprozent der gesamten vinylischen Monomeren hydrophil ist, pro Einheit der Formel I in dem Polymeren.

**19.** Polymeres nach Anspruch 16, worin der Polyvinylalkohol von 50 bis 90 Prozent Einheiten der Formel I enthält, bezogen auf die Anzahl der Hydroxylgruppen auf dem Polyvinylalkohol, wobei die Einheiten der Formel I mit 0,01 bis 10 Einheiten von entweder einem hydrophilen vinylischen Monomeren oder einem Gemisch von hydrophilen und hydrophoben vinylischen Monomeren umgesetzt werden, die wenigstens 50 Gewichtsprozent hydrophiles Monomeres enthalten bezogen auf das Gesamtgewicht der genannten vinylischen Monomeren, bezogen auf die Einheiten der Formel I.

**20.** Polymeres nach einem der Ansprüche 17 bis 19, worin n die Bedeutung Null hat, und A ist Sauerstoff.

**21.** Polymeres nach einem der Ansprüche 17 bis 19, worin n die Bedeutung Null hat, $R^1$ ist Alkylen mit 2 bis 6 Kohlenstoffatomen, A ist Sauerstoff, $R^3$ ist Methyl und $R^4$ ist Wasserstoff.

**22.** Polymeres nach Anspruch 21, worin $R^1$ Ethylen darstellt.

**23.** Polymeres nach einem der Ansprüche 17 bis 19, worin ein hydrophobes Monomeres ausgewählt wird unter $C_{1-18}$-Alkylacrylaten und -methacrylaten, $C_{3-18}$-Alkylacrylamiden und -methacrylamiden, Acrylnitril, Methacrylnitril, Vinyl-$C_{1-18}$-alkanoaten, $C_{2-18}$-Alkenen, $C_{2-18}$-Haloalkenen, Styrol, $C_{1-6}$-Alkylstyrenen, Vinylalkylethern, worin der Alkylteil 1 bis 6 Kohlenstoffatome hat, $C_{3-12}$-Perfluoralkylethylthiocarbonylaminoethyl-acrylaten und - methacrylaten, $C_{3-12}$-Fluoralkylacrylaten und -methacrylaten, Acryloxy- und Methacryloxy-alkylsiloxanen, N-Vinylcarbazol, $C_{1-12}$-Alkylestern der Malein-, Fumar-, Itacon und Mesaconsäure.

**24.** Polymeres nach Anspruch 23, worin ein hydrophobes Monomeres ausgewählt ist unter Methylacrylat, Ethylacrylat, Propylacrylat, Isopropylacrylat, Cyclohexylacrylat, 2-Ethylhexylacrylat, Methylmethacrylat, Ethylmethacrylat, Propylmethacrylat, Vinylacetat, Vinylpropionat, Vinylbutyrat, Vinylvalerat, Styrolchloropren, Vinylchlorid, Vinylidenchlorid, Acrylnitril, 1-Buten, Butadien, Methacrylnitril, Vinyltoluol, Vinylethylether, Perfluorhexylethylthiocarbonylaminoethyl-methacrylat, Isobornylmethacrylat, Hexafluorbutylmethacrylat, 3-Methacryloxypropylpentamethyldisiloxan und Bis(methacryloxypropyl)tetramethyldisiloxan.

**25.** Polymeres nach einem der Ansprüche 17 bis 19, worin ein hydrophiles Monomeres ausgewählt wird unter Hydroxy-substituierten Niederalkylacrylaten und -methacrylaten, Acrylamid, Methacrylamid, $C_{1-2}$-Alkylacrylamid und -methacrylamid, ethoxylierten Acrylaten und Methacrylaten, Hydroxy-substituiertem Niederalkylacrylamid und -methacrylamid, Hydroxy-substituierten Niederalkylvinylethern, Natriumethylensulfonat, Natriumstyrolsulfonat, 2-Acrylamid-2-methylpropansulfonsäure, N-Vinylpyrrol, N-Vinylsuccinimid, N-Vinylpyrrolidon, 2- und 4-Vinylpyridin, Acrylsäure, Methacrylsäure, Amino-(durch Amino einschließlich quaternärem Ammonium)-mononiederalkylamino- oder -diniederalkylamino-niederalkylacrylaten oder -methacrylaten, Allylalkohol.

26. Polymeres nach Anspruch 25, worin ein hydrophiles Monomeres ausgewählt wird unter Hydroxyethylmethacrylat, Hydroxyethylacrylat, Acrylamid, Methacrylamid,Dimethylacrylamid, Allylalkohol, Vinylpyridin, Vinylpyrrolidon, Glycerolmethacrylat, N-(1,1-Dimethyl-3-oxobutyl)acrylamid.

27. Polymeres nach Anspruch 17, worin das hydrophobe vinylische Monomere ausgewählt wird unter Methylmethacrylat und Vinylacetat, und das hydrophile vinylische Monomere ausgewählt wird unter 2-Hydroxyethylmethacrylat, N-Vinylpyrrolidon und Acrylamid.

28. Polymeres nach Anspruch 18, worin das hydrophobe vinylische Monomere ausgewählt wird unter Methylmethacrylat und Vinylacetat, und das hydrophile vinylische Monomere ausgewählt wird unter 2-Hydroxyethylmethacrylat, N-Vinylpyrrolidon und Acrylamid.

29. Polymeres nach Anspruch 19, worin das hydrophobe vinylische Monomere ausgewählt wird unter Methylmethacrylat und Vinylacetat, und das hydrophile vinylische Monomere ausgewählt wird unter 2-Hydroxyethylmethacrylat, N-Vinylpyrrolidon und Acrylamid.

30. Vernetztes polymeres Hydrogelmaterial, hergestellt durch Vernetzung eines Polymeren nach Anspruch 1.

31. Hydratisierte Kontaktlinse, hergestellt durch Vernetzen eines Polymeren nach Anspruch 1 in Gegenwart eines organischen Lösungsmittels und eines Radikalketteninitiators in einer Kontaktlinsenform und Äquilibrieren des erhaltenen gequollenen vernetzten polymeren Materials in einem wäßrigen Medium, um die genannte hydratisierte Kontaktlinse zurückzugewinnen.

32. Verfahren zur Herstellung eines vernetzten polymeren Hydrogelmaterials, dadurch gekennzeichnet, daß ein Polymeres nach Anspruch 1 in Gegenwart eines organischen Lösungsmittels und eines Radikalketteninitiators vernetzt wird.

33. Verfahren nach Anspruch 32, worin ein Photoinitiator und UV-Licht verwendet wird.

34. Verfahren nach Anspruch 33, worin das organische Lösungsmittel ausgewählt wird unter Ethanol, Methanol, Dimethylformamid, Acetamid, Acetonitril, Dimethylacetamid, Dimethylsulfoxid oder Gemischen davon, oder Gemischen davon mit Wasser.

35. Verfahren nach Anspruch 33, worin das organische Lösungsmittel Dimethylsulfoxid ist.

36. Verfahren zur Herstellung einer hydratisierten Kontaktlinse, dadurch gekennzeichnet, daß ein Polymeres nach Anspruch 1 in Gegenwart eines organischen Lösungsmittels und eines Radikalketteninitiators in einer Kontaktlinsenform vernetzt wird und das erhaltene gequollene vernetzte polymere Material in einem wäßrigen Medium äquilibriert wird, um die genannte hydratisierte Kontaktlinse zurückzugewinnen.

37. Verfahren nach Anspruch 36, worin ein Photoinitiator und UV-Licht verwendet wird.

38. Verfahren nach Anspruch 36, worin das organische Lösungsmittel ausgewählt wird unter Ethanol, Methanol, Dimethylformamid, Acetamid, Acetonitril, Dimethylacetamid, Dimethylsulfoxid oder Gemischen davon, oder Gemischen davon mit Wasser.

39. Verfahren nach Anspruch 36, worin das organische Lösungsmittel Dimethylsulfoxid ist.

40. Verwendung eines vernetzten polymeren Hydrogels nach Anspruch 30 zur Herstellung einer Kontaktlinse.

**Patentansprüche für folgenden Vertragsstaat : AT**

1. Verfahren zur Herstellung eines Polymeren, das ein Derivat eines Polyvinylalkohols ist, der ein gewichtsgemitteltes Molekulargewicht von wenigstens 2000 hat und 0,5 bis 90 Prozent, bezogen auf die Anzahl der Hydroxylgruppen im genannten Polyvinylalkohol, an Einheiten der Formel

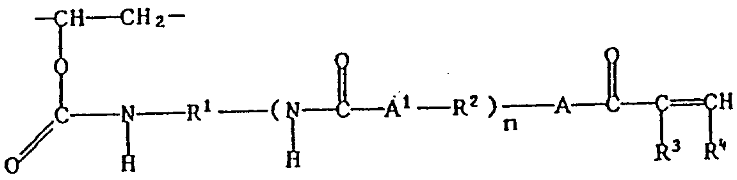

(I)

enthält, worin $R^1$ und $R^2$ unabhängig voneinander Alkylen, Arylen, eine zweiwertige cycloaliphatische Gruppe, Arylenalkylen, Alkylenarylen oder Arylenalkylenarylen ist, n ist 0 oder 1, $A^1$ ist Sauerstoff oder NR', A ist Sauerstoff, NR'' oder eine zweiwertige Ureidogruppe, $R^3$ ist Wasserstoff oder Methyl, $R^4$ ist Wasserstoff, Methyl oder $COOR^5$, worin $R^5$ Wasserstoff oder Niederalkyl darstellt, mit der Maßgabe, daß, wenn $R^3$ Methyl ist, $R^4$ Wasserstoff ist, R' und R'' sind unabhängig voneinander Wasserstoff oder Niederalkyl, wobei das Polymere ein Additionsreaktionsprodukt von Einheiten der Formel I ist mit 0 bis 80 Einheiten eines vinylischen Monomeren pro Einheit der Formel I; mit der Maßgabe, daß nur bis zu 20 Prozent Einheiten der Formel I vorhanden sind für den Fall, wo keine Einheiten eines vinylischen Monomeren eingesetzt werden; und worin der Begriff "Nieder" Gruppen definiert, die bis zu 7 Kohlenstoffatome aufweisen, worin die Ausgangsmaterialien in üblicher Weise miteinander umgesetzt werden.

2. Verfahren nach Anspruch 1, worin in der Formel I $R^1$ und $R^2$ unabhängig voneinander darstellen Alkylen mit 2 bis 8 Kohlenstoffatomen, Arylen mit 6 bis 12 Kohlenstoffatomen, eine gesättigte cycloaliphatische zweiwertige Gruppe mit 6 bis 10 Kohlenstoffatomen, Arylenalkylen oder Alkylenarylen mit 7 bis 14 Kohlenstoffatomen oder Arylenalkylenarylen mit 13 bis 16 Kohlenstoffatomen; A ist Sauerstoff, NR'' oder NHCONR'', worin R'' Wasserstoff oder Niederalkyl darstellt; und die anderen Variablen wie in Anspruch 1 definiert sind.

3. Verfahren nach Anspruch 2, worin in der Formel I $R^1$ und $R^2$ unabhängig voneinander darstellen Alkylen mit 2 bis 6 Kohlenstoffatomen, Phenylen, unsubstituiert oder substituiert durch Niederalkyl, Cyclohexylen, Cyclohexylen-niederalkylen, unsubstituiert oder substituiert durch Niederalkyl, Phenylen-niederalkylen, Niederalkylenphenylen oder Phenylen-niederalkylenphenylen, und n, $A^1$, A, $R^3$ und $R^4$ sind wie in Anspruch 2 definiert.

4. Verfahren nach Anspruch 2, worin in der Formel I A Sauerstoff darstellt, $R^3$ ist Methyl, $R^4$ ist Wasserstoff, n ist Null und $R^1$ ist Alkylen mit 2 bis 6 Kohlenstoffatomen.

5. Verfahren nach Anspruch 2, worin in der Formel I A Sauerstoff darstellt, $R^1$ ist Methyl $R^4$ ist Wasserstoff, n ist eins, $R^1$ ist Niederalkylphenylen oder Niederalkylcylohexylen-niederalkylen, $R^2$ ist Niederalkylen und $A^1$ ist Sauerstoff oder N-Niederalkyl.

6. Verfahren nach Anspruch 1, worin der genannte Polyvinylalkohol ein gewichtsgemitteltes Molekulargewicht von wenigstens 10000 hat.

7. Verfahren nach Anspruch 1, worin der genannte Polyvinylalkohol ein gewichtsgemitteltes Molekulargewicht von bis zu 100000 hat.

8. Verfahren nach Anspruch 1, worin keine Einheiten eines vinylischen Monomeren eingesetzt werden.

9. Verfahren nach Anspruch 8, das von 0,5 bis 20 Prozent Einheiten der Formel I enthält.

10. Verfahren nach Anspruch 9, worin der genannte Polyvinylalkohol ein gewichtsgemitteltes Molekulargewicht zwischen 10000 und 100000 hat.

11. Verfahren nach Anspruch 8, worin n Null ist.

12. Verfahren nach Anspruch 8, worin n die Bedeutung 1 hat, und $A^1$ ist Sauerstoff.

**13.** Verfahren nach Anspruch 8, worin n die Bedeutung 0 hat, $R^1$ ist Alkylen mit 2 bis 6 Kohlenstoffatomen, A ist Sauerstoff, $R^3$ ist Methyl und $R^4$ ist Wasserstoff.

**14.** Verfahren nach Anspruch 13, worin $R^1$ Ethylen ist.

**15.** Verfahren nach Anspruch 1, worin zwischen 0,01 und 80 Einheiten des vinylischen Monomeren pro Einheit der Formel I umgesetzt werden.

**16.** Verfahren nach Anspruch 15, worin das Polymere wenigstens 1 Prozent bis 90 Prozent Einheiten der Formel I enthält, bezogen auf die Anzahl der Hydroxylgruppen auf dem Polyvinylalkohol.

**17.** Verfahren nach Anspruch 16, worin der Polyvinylalkohol wenigstens 1 bis 20 Prozent Einheiten der Formel I enthält, bezogen auf die Anzahl der Hydroxylgruppen auf dem Polyvinylalkohol, wobei die Einheiten der Formel I mit 0,5 bis 30 Einheiten von entweder einem hydrophoben vinylischen Monomeren oder einem Gemisch von hydrophoben und hydrophilen vinylischen Monomeren umgesetzt werden, die wenigstens 50 Gewichtsprozent hydrophobes Monomeres enthalten bezogen auf das Gesamtgewicht der genannten vinylischen Monomeren, bezogen auf die Einheiten der Formel I.

**18.** Verfahren nach Anspruch 16. worin der Polyvinylakohol von 20 bis zu 50 Prozent Einheiten der Formel I enthält, bezogen auf die Anzahl der Hydroxylgruppen auf dem genannten Polyvinylakohol, wobei die Einheiten der Formel I mit 0,01 bis 10 Einheiten des vinylischen Monomeren umgesetzt werden, worin bis zu 80 Gewichtsprozent der gesamten vinylischen Monomeren hydrophil ist, pro Einheit der Formel I in dem Polymeren.

**19.** Verfahren nach Anspruch 16, worin der Polyvinylalkohol von 50 bis 90 Prozent Einheiten der Formel I enthält, bezogen auf die Anzahl der Hydroxylgruppen auf dem Polyvinylakohol, wobei die Einheiten der Formel I mit 0,01 bis 10 Einheiten von entweder einem hydrophilen vinylischen Monomeren oder einem Gemisch von hydrophilen und hydrophoben vinylischen Monomeren umgesetzt werden, die wenigstens 50 Gewichtsprozent hydrophiles Monomeres enthalten bezogen auf das Gesamtgewicht der genannten vinylischen Monomeren, bezogen auf die Einheiten der Formel I.

**20.** Verfahren nach einem der Ansprüche 17 bis 19, worin n die Bedeutung Null hat, und A ist Sauerstoff.

**21.** Verfahren nach einem der Ansprüche 17 bis 19, worin n die Bedeutung Null hat, $R^1$ ist Alkylen mit 2 bis 6 Kohlenstoffatomen, A ist Sauerstoff, $R^3$ ist Methyl und $R^4$ ist Wasserstoff.

**22.** Verfahren nach Anspruch 21, worin $R^1$ Ethylen darstellt.

**23.** Verfahren nach einem der Ansprüche 17 bis 19, worin ein hydrophobes Monomeres ausgewählt wird unter $C_{1-18}$-Alkylacrylaten und -methacrylaten, $C_{3-18}$-Alkylacrylamiden und -methacylamiden, Acrylnitril, Methacrylnitril, Vinyl-$C_{1-18}$-alkanoaten, $C_{2-18}$-Alkenen, $C_{2-18}$-Haloalkenen, Styrol, $C_{1-6}$-Alkylstyrenen, Vinylalkylethern, worin der Alkylteil 1 bis 6 Kohlenstoffatome hat, $C_{3-12}$-Perfluoralkylethylthiocarbonylaminoethyl-acrylaten und - methacrylaten, $C_{3-12}$-Fluoralkylacrylaten und -methacrylaten, Acryloxy- und Methacryloxy-alkylsiloxanen, N-Vinylcarbazol, $C_{1-12}$-Alkylestern der Malein-, Fumar-, Itacon und Mesaconsäure.

**24.** Verfahren nach Anspruch 23, worin ein hydrophobes Monomeres ausgewählt ist unter Methylacrylat, Ethylacrylat, Propylacrylat, Isopropylacrylat, Cyclohexylacrylat, 2-Ethylhexylacrylat, Methylmethacrylat, Ethylmethacrylat, Propylmethacrylat, Vinylacetat, Vinylpropionat, Vinylbutyrat, Vinylvalerat, Styrolchloropren, Vinylchlorid, Vinylidenchlorid, Acrylnitril, 1-Buten, Butadien, Methacrylnitril, Vinyltoluol, Vinylethylether, Perfluorhexylethylthiocarbonylaminoethyl-methacrylat, Isobornylmethacrylat, Hexafluorbutylmethacrylat, 3-Methacryloxypropylpentamethyldisiloxan und Bis(methacryloxypropyl)tetramethyldisiloxan.

**25.** Verfahren nach einem der Ansprüche 17 bis 19, worin ein hydrophiles Monomeres ausgewählt wird unter Hydroxy-substituierten Niederalkylacrylaten und -methacrylaten, Acrylamid, Methacrylamid, $C_{1-2}$-Alkylacrylamid und -methacrylamid, ethoxylierten Acrylaten und -methacrylaten, Hydroxy-substituiertem Niederalkylacrylamid und -methacrylamid, Hydroxy-substituierten Niederalkylvinylethern, Natriumethylensulfonat, Natriumstyrolsulfonat, 2-Acrylamid-2-methylpropansulfonsäure, N-Vinylpyrrol, N-Vinylsuccinimid, N-Vinylpyrrolidon, 2- und 4-Vinylpyridin, Acrylsäure, Methacrylsäure, Amino-(durch Amino einschließlich quaternärem Ammonium)-mononiederalkylamino- oder -diniederalkylamino-niederalkylacrylaten oder -methacrylaten, Allylalkohol.

**26.** Verfahren nach Anspruch 25, worin ein hydrophiles Monomeres ausgewählt wird unter Hydroxyethylmethacrylat, Hydroxyethylacrylat, Acrylamid, Methacrylamid,Dimethylacrylamid, Allylalkohol, Vinylpyridin, Vinylpyrrolidon, Glycerolmethacrylat, N-(1,1-Dimethyl-3-oxobutyl)acrylamid.

**27.** Verfahren nach Anspruch 17, worin das hydrophobe vinylische Monomere ausgewählt wird unter Methylmethacrylat und Vinylacetat, und das hydrophile vinylische Monomere ausgewählt wird unter 2-Hydroxyethylmethacrylat, N-Vinylpyrrolidon und Acrylamid.

**28.** Verfahren nach Anspruch 18, worin das hydrophobe vinylische Monomere ausgewählt wird unter Methylmethacrylat und Vinylacetat, und das hydrophile vinylische Monomere ausgewählt wird unter 2-Hydroxyethylmethacrylat, N-Vinylpyrrolidon und Acrylamid.

**29.** Verfahren nach Anspruch 19, worin das hydrophobe vinylische Monomere ausgewählt wird unter Methylmethacrylat und Vinylacetat, und das hydrophile vinylische Monomere ausgewählt wird unter 2-Hydroxyethylmethacrylat, N-Vinylpyrrolidon und Acrylamid.

**30.** Verfahren zur Herstellung eines vernetzten polymeren Hydrogelmaterials, dadurch gekennzeichnet, daß ein Polymeres hergestellt wird nach Anspruch 1 in Gegenwart eines organischen Lösungsmittels und eines Radikalketteninitiators vernetzt wird.

**31.** Verfahren nach Anspruch 30, worin ein Photoinitiator und UV-Licht verwendet wird.

**32.** Verfahren nach Anspruch 31, worin das organische Lösungsmittel ausgewählt wird unter Ethanol, Methanol, Dimethylformamid, Acetamid, Acetonitril, Dimethylacetamid, Dimethylsulfoxid oder Gemischen davon, oder Gemischen davon mit Wasser.

**33.** Verfahren nach Anspruch 31, worin das organische Lösungsmittel Dimethylsulfoxid ist.

**34.** Verfahren zur Herstellung einer hydratisierten Kontaktlinse, dadurch gekennzeichnet, daß ein Polymeres nach Anspruch 1 in Gegenwart eines organischen Lösungsmittels und eines Radikalketteninitiators in einer Kontaktlinsenform vernetzt wird und das erhaltene gequollene vernetzte polymere Material in einem wäßrigen Medium äquilibriert wird, um die genannte hydratisierte Kontaktlinse zurückzugewinnen.

**35.** Verfahren nach Anspruch 34, worin ein Photoinitiator und UV-Licht verwendet wird.

**36.** Verfahren nach Anspruch 34, worin das organische Lösungsmittel ausgewählt wird unter Ethanol, Methanol, Dimethylformamid, Acetamid, Acetonitril, Dimethylacetamid, Dimethylsulfoxid oder Gemischen davon, oder Gemischen davon mit Wasser.

**37.** Verfahren nach Anspruch 34, worin das organische Lösungsmittel Dimethylsulfoxid ist.

**38.** Verwendung eines vernetzten polymeren Hydrogels nach Anspruch 30 zur Herstellung einer Kontaktlinse.

## Revendications
### Revendications pour les Etats contractants suivants : BE, CH, DE, FR, GB, IT, LI, LU, NL, SE

**1.** Polymère qui est un dérivé d'un alcool polyvinylique, ayant un poids moléculaire moyen en masse d'au moins 2000, contenant de 0,5 à 90 %, par rapport au nombre de groupes hydroxyles dans cet alcool polyvinylique, de motifs répondant à la formule

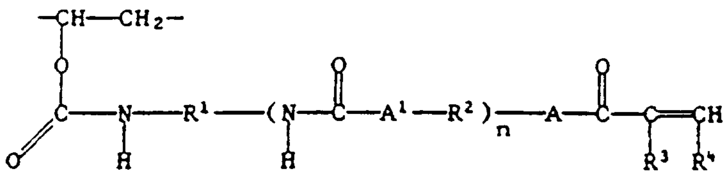

(I)

dans laquelle $R^1$ et $R^2$ sont indépendamment des groupes alkylène, arylène, un groupe cycloaliphatique divalent, un groupe arylènealkylène, alkylènearylène ou arylènealkylènearylène, n est 0 ou 1, $A^1$ est un atome d'oxygène ou NR', A est un atome d'oxygène, NR'' ou un groupe uréido bivalent, $R^3$ est un atome d'hydrogène ou un groupe méthyle, $R^4$ est un atome d'hydrogène, un groupe méthyle ou $COOR^5$, où $R^5$ est un atome d'hydrogène ou un groupe alkyle inférieur, sous réserve que si $R^3$ est un groupe méthyle, $R^4$ est un atome d'hydrogène, R' et R'' sont indépendamment un atome d'hydrogène ou un groupe alkyle inférieur, ce polymère étant un produit de la réaction d'addition de motifs répondant à la formule I avec de 0 à 80 motifs d'un polymère vinylique par motif répondant à la formule I, sous réserve qu'il y ait seulement jusqu'à 20 % de motifs répondant à la formule I dans le cas où l'on n'utilise pas de motifs d'un monomère vinylique ; le terme "inférieur" définissant des groupes ayant jusqu'à 7 atomes de carbone.

**2.** Polymère selon la revendication 1, dans lequel, dans la formule I, $R^1$ et $R^2$ sont indépendamment des groupes alkylène en $C_2$ à $C_8$, arylène en $C_6$ et $C_{12}$, un groupe cycloaliphatique saturé divalent en $C_6$ à $C_{10}$, un groupe arylènealkylène ou alkylènearylène en $C_7$ à $C_{14}$ ou un groupe arylènealkylène en $C_{13}$ à $C_{16}$ ; A est un atome d'oxygène, NR'' ou NHCONR'', où R'' est un atome d'hydrogène ou un groupe alkyle inférieur ; et les autres variables sont telles que définies dans la revendication 1.

**3.** Polymère selon la revendication 2, dans lequel, dans la formule I, $R^1$ et $R^2$ sont indépendamment un groupe alkylène en $C_2$ à $C_6$, phénylène, non substitué ou substitué par un groupe alkyle inférieur, cyclohexylène, cyclohexylène(alkylène inférieur), non substitué ou substitué par un groupe alkyle inférieur, phénylène(alkylène inférieur), (alkylène inférieur)phénylène ou phénylène(alkylène inférieur)-phénylène et n, $A^1$, A, $R^3$ et $R^4$ sont tels que définis dans la revendication 2.

**4.** Polymère selon la revendication 2, dans lequel, dans la formule I, A est un atome d'oxygène, $R^3$ est un groupe méthyle, $R^4$ est un atome d'hydrogène, n est 0 et $R^1$ est un groupe alkylène en $C_2$ à $C_6$.

**5.** Polymère selon la revendication 2, dans lequel, dans la formule I, A est un atome d'oxygène, $R^3$ est un groupe méthyle, $R^4$ est un atome d'hydrogène, n est égal à 1, $R^1$ est un groupe (alkyle inférieur)-phénylène ou (alkyle inférieur)cyclohexylène(alkylène inférieur), $R^2$ est un groupe alkylène inférieur et $A^1$ est un atome d'oxygène ou un groupe N-alkyle inférieur.

**6.** Polymère selon la revendication 1, dans lequel ledit alcool polyvinylique a un poids moléculaire moyen en masse d'au moins 10.000.

**7.** Polymère selon la revendication 1, dans lequel ledit alcool polyvinylique a un poids moléculaire moyen en masse allant jusqu'à 100.000.

**8.** Polymère selon la revendication 1, dans lequel on n'utilise pas de motifs d'un monomère vinylique.

**9.** Polymère selon la revendication 8, contenant de 0,5 à 20 % de motifs répondant à la formule I.

**10.** Polymère selon la revendication 9, dans lequel cet alcool polyvinylique a un poids moléculaire moyen en masse compris entre 10.000 et 100.000.

**11.** Polymère selon la revendication 8, dans lequel n est 0.

**12.** Polymère selon la revendication 8, dans lequel n est 1 et $A^1$ est atome d'oxygène.

**13.** Polymère selon la revendication 8, dans lequel n est 0, $R^1$ est une groupe alkylène en $C_2$ à $C_6$, A est un atome d'oxygène, $R^3$ est un groupe méthyle et $R^4$ est un atome d'hydrogène.

**14.** Polymère selon la revendication 13, dans lequel $R^1$ est un groupe éthylène.

**15.** Polymère selon la revendication 1, dans lequel entre 0,01 et 80 motifs de monomères vinyliques sont mis à réagir par motif répondant à la formule I.

**16.** Polymère selon la revendication 15, dans lequel le polymère contient d'au moins 1 % à 90 % de motifs répondant à la formule I, par rapport au nombre de groupes hydroxyles sur l'alcool polyvinylique.

**17.** Polymère selon la revendicaiton 16, dans lequel l'alcool polyvinylique contient au moins 1 et jusqu'à 20 % de motifs répondant à la formule I par rapport au nombre de groupes hydroxyle sur cet alcool polyvinylique, lesquels motifs répondant à la formule I sont mis à réagir avec 0,5 à 30 motifs soit d'un monomère vinylique hydrophobe, soit d'un mélange de monomères hydrophobes et hydrophiles contenant au moins 50 % en poids de monomères hydrophobes par rapport au poids total desdits monomères vinyliques, par rapport aux motifs répondant à la formule I.

**18.** Polymère selon la revendication 16, dans lequel l'alcool polyvinylique contient de 20 à 50 % de motifs répondant à la formule I par rapport au nombre de groupes hydroxyles sur ledit alcool polyvinylique, lesquels motifs répondant à la formule I sont mis à réagir avec 0,01 à 10 motifs de monomères vinyliques, dans lequel jusqu'à 80 % en poids du monomère vinylique total sont hydrophiles, par motif répondant à la formule I dans le polymère.

**19.** Polymère selon la revendication 16, dans lequel l'alcool polyvinylique contient de 50 à 90 % de motifs répondant à la formule I par rapport au nombre de groupes hydroxyles sur cet alcool polyvinylique, lesquels motifs répondant à la formule I sont mis à réagir avec 0,01 à 10 motifs soit d'un monomère vinylique hydrophile, soit d'un mélange de monomères hydrophiles et hydrophobes contenant au moins 50 % en poids de monomères hydrophiles par rapport au poids total de ces monomères vinyliques, par rapport aux motifs répondant à la formule I.

**20.** Polymère selon l'une quelconque des revendications 17 à 19, dans lequel n est 0 et A est un atome d'oxygène.

**21.** Polymère selon l'une quelconque des revendications 17 à 19, dans lequel n est 0, $R^1$ est un groupe alkylène en $C_2$ à $C_6$, A est un atome d'oxygène, $R^3$ est un groupe méthyle et $R^4$ est un atome d'hydrogène.

**22.** Polymère selon la revendication 21, dans lequel $R^1$ est un groupe éthylène.

**23.** Polymère selon l'une quelconque des revendications 17 à 19, dans lequel le monomère hydrophobe est choisi parmi des acrylates et méthacrylates d'alkyle en $C_1$ à $C_{18}$, des (alkyl en $C_3$ à $C_{18}$)-acrylamides et méthacrylamides, l'acrylonitrile, le méthacrylonitrile, des alcanoates de vinyle en $C_1$ à $C_{18}$, des alcènes en $C_2$ à $C_{18}$, des haloalcènes en $C_2$ à $C_{18}$, le styrène, des (alkyl en $C_1$ à $C_6$)-styrènes, des éthers vinyliques alkyliques dans lesquels la partie alkyle a de 1 à 6 atomes de carbone, des acrylates et méthacrylates de perfluoralkyle en $C_3$ à $C_{12}$ éthylthiocarbonylaminoéthyle, des acrylates et méthacrylates de fluoralkyle en $C_3$ à $C_{12}$, des acryloxy et méthacryloxy alkylsiloxannes, le N-vinylcarbazole, des esters d'alkyle en $C_1$ à $C_{12}$ des acides maléique, fumarique, itaconique et mésaconique.

**24.** Polymère selon la revendication 23, dans lequel un monomère hydrophobe est choisi parmi l'acrylate de méthyle, l'acrylate d'éthyle, l'acrylate de propyle, l'acrylate d'isopropyle, l'acrylate de cyclohexyle, l'acrylate de 2-éthylhexyle, le méthacrylate de méthyle, le méthacrylate d'éthyle, le méthacrylate de propyle, l'acétate de vinyle, le propionate de vinyle, le butyrate de vinyle, le valérate de vinyle, le styrène, le chloroprène, le chlorure de vinyle, le chlorure vinylidène, l'acrylonitrile, le 1-butène, le butadiène, le méthacrylonitrile, le vinyltoluène, l'éther vinylique éthylique, le méthacrylate de perfluorhexyléthylthiocarbonylaminoéthyle, le méthacrylate d'isobornyle, le méthacrylate d'hexafluorobutyle, le 3-méthacryloxypropylpentaméthyldisiloxanne et le bis(méthacryloxypropyl)tétraméthyldisiloxanne.

**25.** Polymère selon l'une quelconque des revendications 17 à 19, dans lequel un monomère hydrophile est choisi parmi les acrylates et méthacrylates d'alkyle inférieur hydro-substitué, l'acrylamide, le méthacrylamide, l'acrylamide et le méthacrylamide d'alkyle en $C_1$ à $C_2$, les acrylates et méthacrylate éthoxylés, l'acrylamide et le méthacrylamide d'alkyle inférieur hydroxy-substitué, les éthers(alkyle inférieur)-vinyliques hydroxy-substitués, l'éthylènesulfonate de sodium, le styrènesulfonate de sodium, l'acide 2-acrylamido-2-méthylpropanesulfonique, le N-vinylpyrrole, le N-vinylsuccinimide, la N-vinylpyrrolidone, les 2- et 4-vinylpyridines, l'acide acrylique, l'acide méthacrylique, les acrylates et méthacrylates d'amino (ce terme comprenant l'ammonium quaternaire) -mono(alkyl inférieur)amino- ou di(alkyl inférieur)amino-(alkyl inférieur), l'alcool allylique.

**26.** Polymère selon la revendication 25, dans lequel un monomère hydrophile est choisi parmi le méthacrylate d'hydroxyéthyle, l'acrylate d'hydroxyéthyle, l'acrylamide, le méthacrylamide, le diméthacrylamide, l'alcool allylique, la vinylpyridine, la vinylpyrrolidone, le méthacrylate de glycérol le N-(1,1-diméthyl-3-oxobutyl)acrylamide.

**27.** Polymère selon la revendication 17, dans lequel le monomère vinylique hydrophobe est choisi parmi le méthacrylate de méthyle et l'acétate de vinyle et le monomère vinylique hydrophile est choisi parmi le méthacrylate de 2-hydroxyéthyle, la N-vinylpyrrolidone et l'acrylamide.

**28.** Polymère selon la revendication 18, dans lequel le monomère vinylique hydrophobe est choisi parmi le méthacrylate de méthyle et l'acétate de vinyle et le monomère vinylique hydrophile est choisi parmi le méthacrylate de 2-hydroxyéthyle, la N-vinylpyrrolidone et l'acrylamide.

**29.** Polymère selon la revendication 19, dans lequel le monomère vinylique hydrophobe est choisi parmi le méthacrylate de méthyle et l'acétate de vinyle et le monomère vinylique hydrophile est choisi parmi le méthacrylate de 2-hydroxyéthyle, la N-vinylpyrrolidone et l'acrylamide.

**30.** Matière d'hydrogel polymère réticulé, préparée en réticulant un polymère selon la revendication 1.

**31.** Lentille de contact hydratée préparée en réticulant un polymère selon la revendication 1, en présence d'un solvant organique et d'un agent d'amorçage radicalaire, dans un moule à lentille de contact, et en équilibrant la matière polymère réticulée gonflée obtenue dans un milieu aqueux pour récupérer cette lentille de contact hydratée.

**32.** Procédé de fabrication d'une matière d'hydrogel polymère réticulée, caractérisée en ce qu'on réticule un polymère selon la revendication 1 en présence d'un solvant organique et d'un agent d'amorçage radicalaire.

**33.** Procédé selon la revendication 32, dans lequel on utilise un photo-initiateur et une lumière UV.

**34.** Procédé selon la revendication 33, dans lequel le solvant organique est choisi parmi l'éthanol, le méthanol, le diméthylformamide, l'acétamide, l'acétonitrile, le diméthylacétamide, le sulfoxyde de diméthyle ou des mélanges de ceux-ci, ou des mélanges de ceux-ci avec l'eau.

**35.** Procédé selon la revendication 33, dans lequel le solvant organique est le sulfoxyde de diméthyle.

**36.** Procédé pour la fabrication d'une lentille de contact hydratée, caractérisé en ce qu'on réticule un polymère selon la revendication 1, en présence d'un solvant organique et d'un agent d'amorçage radicalaire, dans un moule à lentille de contact, et en ce qu'on met en équilibre la matière polymère réticulée gonflée obtenue dans un milieu aqueux pour récupérer cette lentille de contact hydratée.

**37.** Procédé selon la revendication 36, dans lequel on utilise un photo-initiateur et une lumière UV.

**38.** Procédé selon la revendication 36, dans lequel le solvant organique est choisi parmi l'éthanol, le méthanol, le diméthylformamide, l'acétamide, l'acétonitrile, le diméthylacétamide, le sulfoxyde de diméthyle ou des mélanges de ceux-ci, ou des mélanges de ceux-ci avec l'eau.

**39.** Procédé selon la revendication 36, dans lequel le solvant organique est le sulfoxyde de diméthyle.

**40.** Utilisation d'un hydrogel polymère réticulé selon la revendication 30 pour la fabrication d'une lentille de contact.

**Revendications pour l'Etat contractant suivant : AT**

**1.** Procédé de préparation d'un polymère qui est un dérivé d'un alcool polyvinylique, ayant un poids moléculaire moyen en masse d'au moins 2000, contenant de 0,5 à 90 %, par rapport au nombre de groupes hydroxyles dans cet alcool polyvinylique, de motifs répondant à la formule

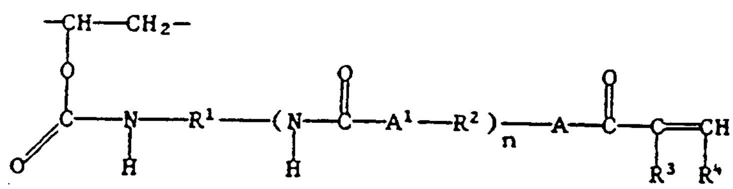

(I)

dans laquelle $R^1$ et $R^2$ sont indépendamment des groupes alkylène, arylène, un groupe cycloaliphatique divalent, un groupe arylènealkylène, alkylènearylène ou arylènealkylènearylène, n est 0 ou 1, $A^1$ est un atome d'oxygène ou NR', A est un atome d'oxygène, NR'' ou un groupe uréido bivalent, $R^3$ est un atome d'hydrogène ou un groupe méthyle, $R^4$ est un atome d'hydrogène, un groupe méthyle ou $COOR^5$, où $R^5$ est un atome d'hydrogène ou un groupe alkyle inférieur, sous réserve que si $R^3$ est un groupe méthyle, $R^4$ est un atome d'hydrogène, R' et R'' sont indépendamment un atome d'hydrogène ou un groupe alkyle inférieur, ce polymère étant un produit de la réaction d'addition de motifs répondant à la formule I avec de 0 à 80 motifs d'un polymère vinylique par motif répondant à la formule I, sous réserve qu'il y ait seulement jusqu'à 20 % de motifs répondant à la formule I dans le cas où l'on n'utilise pas de motifs d'un monomère vinylique ; et dans laquelle le terme "inférieur" définit des groupes ayant jusqu'à 7 atomes de carbone, dans lequel on fait réagir les matières de départ d'une manière classique.

**2.** Procédé selon la revendication 1, dans lequel, dans la formule I, $R^1$ et $R^2$ sont indépendamment des groupes alkylène en $C_2$ à $C_8$, arylène en $C_6$ et $C_{12}$, un groupe cycloaliphatique saturé divalent en $C_6$ à $C_{10}$, un groupe arylènealkylène ou alkylènearylène en $C_7$ à $C_{14}$ ou un groupe arylènealkylène en $C_{13}$ à $C_{16}$ ; A est un atome d'oxygène, NR'' ou NHCONR'', où R'' est un atome d'hydrogène ou un groupe alkyle inférieur ; et les autres variables sont telles que définies dans la revendication 1.

**3.** Procédé selon la revendication 2, dans lequel, dans la formule I, $R^1$ et $R^2$ sont indépendamment un groupe alkylène en $C_2$ à $C_6$, phénylène, non substitué ou substitué par un groupe alkyle inférieur, cyclohexylène, cyclohexylène(alkylène inférieur), non substitué ou substitué par un groupe alkyle inférieur, phénylène(alkylène inférieur), (alkylène inférieur)phénylène ou phénylène(alkylène inférieur)-phénylène et n, $A^1$, A, $R^3$ et $R^4$ sont tels que définis dans la revendication 2.

**4.** Procédé selon la revendication 2, dans lequel, dans la formule I, A est un atome d'oxygène, $R^3$ est un groupe méthyle, $R^4$ est un atome d'hydrogène, n est 0 et $R^1$ est un groupe alkylène en $C_2$ à $C_6$.

**5.** Procédé selon la revendication 2, dans lequel, dans la formule I, A est un atome d'oxygène, $R^3$ est un groupe méthyle, $R^4$ est un atome d'hydrogène, n est égal à 1, $R^1$ est un groupe (alkyl inférieur)-phénylène ou (alkyl inférieur)cyclohexylène(alkylène inférieur), $R^2$ est un groupe alkylène inférieur et $A^1$ est un atome d'oxygène ou un groupe N-alkyle inférieur.

**6.** Procédé selon la revendication 1, dans lequel ledit alcool polyvinylique a un poids moléculaire moyen en poids d'au moins 10.000.

**7.** Procédé selon la revendication 1, dans lequel ledit alcool polyvinylique a un poids moléculaire moyen en poids allant jusqu'à 100.000.

**8.** Procédé selon la revendication 1, dans lequel on n'utilise pas de motifs d'un monomère vinylique.

9. Procédé selon la revendication 8, contenant de 0,5 à 20 % de motifs répondant à la formule I.

10. Procédé selon la revendication 9, dans lequel cet alcool polyvinylique a un poids moléculaire moyen en poids comprise entre 10.000 et 100.000.

11. Procédé selon la revendication 8, dans lequel n est 0.

12. Procédé selon la revendication 8, dans lequel n est 1 et $A^1$ est atome d'oxygène.

13. Procédé selon la revendication 8, dans lequel n est 0, $R^1$ est une groupe alkylène en $C_2$ à $C_6$, A est un atome d'oxygène, $R^3$ est un groupe méthyle et $R^4$ est un atome d'hydrogène.

14. Procédé selon la revendication 13, dans lequel $R^1$ est un groupe éthylène.

15. Procédé selon la revendication 1, dans lequel entre 0,01 et 80 motifs de monomères vinyliques sont mis à réagir par motif répondant à la formule I.

16. Procédé selon la revendication 15, dans lequel le polymère contient d'au moins 1 % à 90 % de motifs répondant à la formule I, par rapport au nombre de groupes hydroxyles sur l'alcool polyvinylique.

17. Procédé selon la revendicaiton 16, dans lequel l'alcool polyvinylique contient au moins 1 et jusqu'à 20 % de motifs répondant à la formule I par rapport au nombre de groupes hydroxyles sur cet alcool polyvinylique, lesquels motifs répondant à la formule I sont mis à réagir avec 0,5 à 30 motifs soit d'un monomère vinylique hydrophobe, soit d'un mélange de monomères hydrophobes et hydrophiles contenant au moins 50 % en poids de monomères hydrophobes par rapport au poids total desdits monomères vinyliques, par rapport aux motifs répondant à la formule I.

18. Procédé selon la revendication 16, dans lequel l'alcool polyvinylique contient de 20 à 50 % de motifs répondant à la formule I par rapport au nombre de groupes hydroxyles sur ledit alcool polyvinylique, lesquels motifs répondant à la formule I sont mis à réagir avec 0,01 à 10 motifs de monomères vinyliques, dans lequel jusqu'à 80 % en poids du monomère vinylique total sont hydrophiles, par motif répondant à la formule I dans le polymère.

19. Procédé selon la revendication 16, dans lequel l'alcool polyvinylique contient de 50 à 90 % de motifs répondant à la formule I par rapport au nombre de groupes hydroxyles sur cet alcool polyvinylique, lesquels motifs répondant à la formule I sont mis à réagir avec 0,01 à 10 motifs soit d'un monomère vinylique hydrophile, soit d'un mélange de monomères hydrophiles et hydrophobes contenant au moins 50 % en poids de monomères hydrophiles par rapport au poids total de ces monomères vinyliques, par rapport aux motifs répondant à la formule I.

20. Procédé selon l'une quelconque des revendications 17 à 19, dans lequel n est 0 et A est un atome d'oxygène.

21. Procédé selon l'une quelconque des revendications 17 à 19, dans lequel n est 0, $R^1$ est un groupe alkylène en $C_2$ à $C_6$, A est un atome d'oxygène, $R^3$ est un groupe méthyle et $R^4$ est un atome d'hydrogène.

22. Procédé selon la revendication 21, dans lequel $R^1$ est un groupe éthylène.

23. Procédé selon l'une quelconque des revendications 17 à 19, dans lequel le monomère hydrophobe est choisi parmi des acrylates et méthacrylates d'alkyle en $C_1$ à $C_{18}$, des (alkyl en $C_3$ à $C_{18}$)acrylamides et méthacrylamides, l'acrylonitrile, le méthacrylonitrile, des alcanoates de vinyle en $C_1$ à $C_{18}$, des alcènes en $C_2$ à $C_{18}$, des haloalcènes en $C_2$ à $C_{18}$, le styrène, des (alkyl en $C_1$ à $C_6$)styrènes, des éthers vinyliques alkyliques dans lesquels la partie alkyle a de 1 à 6 atomes de carbone, des acrylates et méthacrylates de perfluoralkyle en $C_3$ à $C_{12}$ éthylthiocarbonylaminoéthyle, des acrylates et méthacrylates de fluoralkyle en $C_3$ à $C_{12}$, des acryloxy et méthacryloxy alkylsiloxannes, le N-vinylcarbazole, des esters d'alkyle en $C_1$ à $C_{12}$ des acides maléique, fumarique, itaconique et mésaconique.

24. Procédé selon la revendication 23, dans lequel un monomère hydrophobe est choisi parmi l'acrylate de méthyle, l'acrylate d'éthyle, l'acrylate de propyle, l'acrylate d'isopropyle, l'acrylate de cyclohexyle, l'acrylate de 2-éthylhexyle, le méthacrylate de méthyle, le méthacrylate d'éthyle, le méthacrylate de propyle, l'acétate de vinyle, le propionate de vinyle, le butyrate de vinyle, le valérate de vinyle, le styrène, le chloroprène, le chlorure de vinyle, le chlorure vinylidène, l'acrylonitrile, le 1-butène, le butadiène, le méthacrylonitrile, le vinyltoluène, l'éther vinylique éthylique, le méthacrylate de perfluorhexyléthylthiocarbonylaminoéthyle, le méthacrylate d'isobornyle, le méthacrylate d'hexafluorobutyle, le 3-méthacryloxypropylpentaméthyldisiloxanne et le bis(méthacryloxypropyl)tétraméthyldisiloxanne.

25. Procédé selon l'une quelconque des revendications 17 à 19, dans lequel un monomère hydrophile est choisi parmi les acrylates et méthacrylates d'alkyle inférieur hydro-substitué, l'acrylamide, le méthacrylamide, l'acrylamide et le méthacrylamide d'alkyle en $C_1$ à $C_2$, les acrylates et méthacrylate éthoxylés, l'acrylamide et le méthacrylamide d'alkyle inférieur hydroxy-substitué, les éthers(alkyle inférieur)-vinyliques hydroxy-substitués, l'éthylènesulfonate de sodium, le styrènesulfonate de sodium, l'acide 2-acrylamido-2-méthylpropanesulfonique, le N-vinylpyrrole, le N-vinylsuccinimide, la N-vinylpyrrolidone, les 2- et 4-vinylpyridines, l'acide acrylique, l'acide méthacrylique, les acrylates et méthacrylates d'amino (ce terme comprenant l'ammonium quaternaire) -mono(alkyl inférieur)amino- ou di(alkyl inférieur)amino-(alkyl inférieur), l'alcool allylique.

26. Procédé selon la revendication 25, dans lequel un monomère hydrophile est choisi parmi le méthacrylate d'hydroxyéthyle, l'acrylate d'hydroxyéthyle, l'acrylamide, le méthacrylamide, le diméthacrylamide, l'alcool allylique, la vinylpyridine, la vinylpyrrolidone, le méthacrylate de glycérol le N-(1,1-diméthyl-3-oxobutyl)acrylamide.

27. Procédé selon la revendication 17, dans lequel le monomère vinylique hydrophobe est choisi parmi le méthacrylate de méthyle et l'acétate de vinyle et le monomère vinylique hydrophile est choisi parmi le méthacrylate de 2-hydroxyéthyle, la N-vinylpyrrolidone et l'acrylamide.

28. Procédé selon la revendication 18, dans lequel le monomère vinylique hydrophobe est choisi parmi le méthacrylate de méthyle et l'acétate de vinyle et le monomère vinylique hydrophile est choisi parmi le méthacrylate de 2-hydroxyéthyle, la N-vinylpyrrolidone et l'acrylamide.

29. Procédé selon la revendication 19, dans lequel le monomère vinylique hydrophobe est choisi parmi le méthacrylate de méthyle et l'acétate de vinyle et le monomère vinylique hydrophile est choisi parmi le méthacrylate de 2-hydroxyéthyle, la N-vinylpyrrolidone et l'acrylamide.

30. Procédé de fabrication d'une matière d'hydrogel polymère réticulée, caractérisée en ce qu'on réticule un polymère préparé selon la revendication 1 en présence d'un solvant organique et d'un agent d'amorçage radicalaire.

31. Procédé selon la revendication 30, dans lequel on utilise un photo-initiateur et une lumière UV.

32. Procédé selon la revendication 31, dans lequel le solvant organique est choisi parmi l'éthanol, le méthanol, le diméthylformamide, l'acétamide, l'acétonitrile, le diméthylacétamide, le sulfoxyde de diméthyle ou des mélanges de ceux-ci, ou des mélanges de ceux-ci avec l'eau.

33. Procédé selon la revendication 31, dans lequel le solvant organique est le sulfoxyde de diméthyle.

34. Procédé pour la fabrication d'une lentille de contact hydratée, caractérisé en ce qu'on réticule un polymère selon la revendication 1, en présence d'un solvant organique et d'un agent d'amorçage radicalaire, dans un moule à lentille de contact, et en ce qu'on met en équilibre la matière polymère réticulée gonflée obtenue dans un milieu aqueux pour récupérer cette lentille de contact hydratée.

35. Procédé selon la revendication 34, dans lequel on utilise un photo-initiateur et une lumière UV.

36. Procédé selon la revendication 34, dans lequel le solvant organique est choisi parmi l'éthanol, le méthanol, le diméthylformamide, l'acétamide, l'acétonitrile, le diméthylacétamide, le sulfoxyde de diméthyle ou des mélanges de ceux-ci, ou des mélanges de ceux-ci avec l'eau.

**37.** Procédé selon la revendication 34, dans lequel le solvant organique est le sulfoxyde de diméthyle.

**38.** Utilisation d'un hydrogel polymère réticulé selon la revendication 30 pour la fabrication d'une lentille de contact.